# EUROPEAN PATENT APPLICATION

(11) **EP 4 788 056 A2**
(43) Date of publication of application: **05.08.2026**
(21) Application number: 26187186.7
(22) Date of filing: 14.01.2021
(51) Int. Cl.: H04W 88/04

(54) **TECHNIQUES FOR REMOTE USER EQUIPMENT HANDOVER DUE TO RELAY USER EQUIPMENT MOBILITY**

(62) Divisional of application: 21703810.8
(71) Applicant: QUALCOMM Incorporated, San Diego, CA 92121-1714 (US)
(72) Inventor: CHENG, Peng, San Diego, 92121-1714 (US); PALADUGU, Karthika, San Diego, 92121-1714 (US); CHENG, Hong, San Diego, 92121-1714 (US); HORN, Gavin Bernard, San Diego, 92121-1714 (US)
(74) Representative: Jaeger, Michael David

(57) **Abstract**

Methods, systems, and devices for wireless communications are described. A first user equipment (UE) may be configured to communicate with a first base station, where the first UE is configured to relay wireless communications between a second UE and the first base station via at least a sidelink communication link between the first UE and the second UE. The first UE may receive, from the first base station, an indication for the first UE to perform a first handover procedure from the first base station to a second base station. The first UE may transmit, to the second UE via the sidelink communication link and based on receiving the indication to perform the first handover procedure, a sidelink transmission including a trigger for the second UE to perform a second handover procedure or a reselection procedure. The first UE may then communicate with the second base station based on performing the first handover procedure from the first base station to the second base station.

## Description

### FIELD OF TECHNOLOGY

The following relates to wireless communications, including techniques for remote user equipment (UE) handover due to relay UE mobility.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Some wireless communications systems may support sidelink relays in which a relay UE may forward, or relay, wireless communications between a base station and a remote UE. Among other advantages, the use of sidelink relays may enable remote UEs to reduce a transmission power of uplink transmissions, thereby reducing a power consumption at the remote UE. However, the use of sidelink relays may result in complexities in the context of performing cell handover procedures.

### SUMMARY

The described techniques relate to improved methods, systems, devices, and apparatuses that support techniques for remote user equipment (UE) handover due to relay UE mobility. Generally, the described techniques provide techniques for handover procedures at both relay UEs and remote UEs which may reduce, or eliminate, interruptions at a remote UE which are attributable to a handover of a relay UE. In some aspects, the network (e.g., base stations) of a wireless communications system may determine that a remote UE communicatively coupled to a relay UE is to perform a handover procedure and/or reselection procedure (e.g., when a relay UE performs a handover from a source base station to a target base station). The network may in some cases determine that the remote UE is to transition from one relay UE to another (for example, as a result of movement of the remote UE, source relay UE, and/or target relay UE). In these scenarios, the remote UE may receive and/or identify an indication of a trigger of the handover procedure/reselection procedure from the source relay UE. For example, the UE may identify a trigger for the handover procedure based on an interruption in communications with the source relay UE. The remote UE may then release and/or suspend communications over a wireless connection between the remote UE and the source relay UE based on the trigger. Subsequently, the remote UE may perform the handover procedure and/or reselection procedure in order to re-establish wireless communications with the source relay UE, establish wireless communications with a different target relay UE, and/or establish direct wireless communications with a base station.

A method for wireless communication at a first user equipment (UE) is described. The method may include communicating with a first base station, where the first UE is configured to relay wireless communications between a second UE and the first base station via at least a sidelink communication link between the first UE and the second UE, receiving, from the first base station, an indication for the first UE to perform a first handover procedure from the first base station to a second base station, transmitting, to the second UE via the sidelink communication link and based on receiving the indication to perform the first handover procedure, a sidelink transmission including a trigger for the second UE to perform a second handover procedure or a reselection procedure, and communicating with the second base station based on performing the first handover procedure from the first base station to the second base station.

An apparatus for wireless communication at a first UE is described. The apparatus may include a processor, memory in electronic communication with the processor, and instructions stored in the memory. The instructions may be executable by the processor to cause the apparatus to communicate with a first base station, where the first UE is configured to relay wireless communications between a second UE and the first base station via at least a sidelink communication link between the first UE and the second UE, receive, from the first base station, an indication for the first UE to perform a first handover procedure from the first base station to a second base station, transmit, to the second UE via the sidelink communication link and based on receiving the indication to perform the first handover procedure, a sidelink transmission including a trigger for the second UE to perform a second handover procedure or a reselection procedure, and communicate with the second base station based on performing the first handover procedure from the first base station to the second base station.

Another apparatus for wireless communication at a first UE is described. The apparatus may include means for communicating with a first base station, where the first UE is configured to relay wireless communications between a second UE and the first base station via at least a sidelink communication link between the first UE and the second UE, means for receiving, from the first base station, an indication for the first UE to perform a first handover procedure from the first base station to a second base station, means for transmitting, to the second UE via the sidelink communication link and based on receiving the indication to perform the first handover procedure, a sidelink transmission including a trigger for the second UE to perform a second handover procedure or a reselection procedure, and means for communicating with the second base station based on performing the first handover procedure from the first base station to the second base station.

A non-transitory computer-readable medium storing code for wireless communication at a first UE is described. The code may include instructions executable by a processor to communicate with a first base station, where the first UE is configured to relay wireless communications between a second UE and the first base station via at least a sidelink communication link between the first UE and the second UE, receive, from the first base station, an indication for the first UE to perform a first handover procedure from the first base station to a second base station, transmit, to the second UE via the sidelink communication link and based on receiving the indication to perform the first handover procedure, a sidelink transmission including a trigger for the second UE to perform a second handover procedure or a reselection procedure, and communicate with the second base station based on performing the first handover procedure from the first base station to the second base station.

Some examples of the method, apparatuses, and non-transitory computer-readable medium described herein may further include operations, features, means, or instructions for performing the second handover procedure or the reselection procedure with the second UE based on the first handover procedure and identifying an interruption in data transfer between the first UE and the second UE and communicating with the second UE via the sidelink communication link based on performing the second handover procedure or the reselection procedure.

Some examples of the method, apparatuses, and non-transitory computer-readable medium described herein may further include operations, features, means, or instructions for transmitting, to the second base station, a radio resource control (RRC) message indicating a completion of the first handover procedure, where communicating with the second base station may be based on transmitting the RRC message.

Some examples of the method, apparatuses, and non-transitory computer-readable medium described herein may further include operations, features, means, or instructions for transmitting, to the second UE via the sidelink transmission, a sidelink release message indicating for the second UE to release a wireless connection between the first UE and the second UE.

In some examples of the method, apparatuses, and non-transitory computer-readable medium described herein, the sidelink release message includes a Layer 2 (L2) release message..

Some examples of the method, apparatuses, and non-transitory computer-readable medium described herein may further include operations, features, means, or instructions for transmitting, to the second UE via the sidelink transmission, a sidelink modification message indicating for the second UE to reconfigure a wireless connection between the first UE and the second UE..

In some examples of the method, apparatuses, and non-transitory computer-readable medium described herein, the sidelink transmission includes an RRC message and the method, apparatuses, and non-transitory computer-readable medium may include further operations, features, means, or instructions for transmitting, to the second UE via the RRC message, an indication of the first handover procedure, an identifier associated with the second base station, or both, where the indication to perform the second handover procedure, the reselection procedure, or both, may be based on the indication of the first handover procedure, the identifier associated with the second base station, or both.

Some examples of the method, apparatuses, and non-transitory computer-readable medium described herein may further include operations, features, means, or instructions for transmitting, to the second UE based on identifying an interruption of data transfer between the first UE and the second UE, an RRC message including an indication of a completion of the first handover procedure, an indication of an identifier associated with the second base station, or both, receiving, from the second UE, a request to reestablish wireless communications between the first UE and the second UE based on the RRC message, and communicating with the second UE via the sidelink communication link based on receiving the request.

Some examples of the method, apparatuses, and non-transitory computer-readable medium described herein may further include operations, features, means, or instructions for relaying the request from the second UE to the second base station based on receiving the request and relaying wireless communications between the second UE and the second base station via at least the sidelink communication link between the first UE and the second base station based on relaying the request.

A method for wireless communication at a second UE is described. The method may include communicating with a first base station via a first UE, where the first UE is configured to relay wireless communications between the second UE and the first base station via at least a sidelink communication link between the first UE and the second UE, identifying a trigger for the second UE to perform a second handover procedure or a reselection procedure, where the trigger is based on a first handover procedure of the first UE from the first base station to a second base station, and performing at least one of the second handover procedure or the reselection procedure based on identifying the trigger.

An apparatus for wireless communication at a second UE is described. The apparatus may include a processor, memory in electronic communication with the processor, and instructions stored in the memory. The instructions may be executable by the processor to cause the apparatus to communicate with a first base station via a first UE, where the first UE is configured to relay wireless communications between the second UE and the first base station via at least a sidelink communication link between the first UE and the second UE, identify a trigger for the second UE to perform a second handover procedure or a reselection procedure, where the trigger is based on a first handover procedure of the first UE from the first base station to a second base station, and perform at least one of the second handover procedure or the reselection procedure based on identifying the trigger.

Another apparatus for wireless communication at a second UE is described. The apparatus may include means for communicating with a first base station via a first UE, where the first UE is configured to relay wireless communications between the second UE and the first base station via at least a sidelink communication link between the first UE and the second UE, means for identifying a trigger for the second UE to perform a second handover procedure or a reselection procedure, where the trigger is based on a first handover procedure of the first UE from the first base station to a second base station, and means for performing at least one of the second handover procedure or the reselection procedure based on identifying the trigger.

A non-transitory computer-readable medium storing code for wireless communication at a second UE is described. The code may include instructions executable by a processor to communicate with a first base station via a first UE, where the first UE is configured to relay wireless communications between the second UE and the first base station via at least a sidelink communication link between the first UE and the second UE, identify a trigger for the second UE to perform a second handover procedure or a reselection procedure, where the trigger is based on a first handover procedure of the first UE from the first base station to a second base station, and perform at least one of the second handover procedure or the reselection procedure based on identifying the trigger.

Some examples of the method, apparatuses, and non-transitory computer-readable medium described herein may further include operations, features, means, or instructions for performing the second handover procedure or the reselection procedure with the second UE based on the first handover procedure and identifying an interruption in data transfer between the first UE and the second UE and communicating with the first UE via the sidelink communication link based on performing the second handover procedure or the reselection procedure.

Some examples of the method, apparatuses, and non-transitory computer-readable medium described herein may further include operations, features, means, or instructions for receiving, from the first UE, a sidelink release message indicating for the second UE to release a wireless connection between the first UE and the second UE and releasing the wireless connection between the first UE and the second UE based on receiving the release message, where performing the second handover procedure or the reselection procedure may be based on releasing the wireless connection.

In some examples of the method, apparatuses, and non-transitory computer-readable medium described herein, the sidelink release message includes an L2 release message.

Some examples of the method, apparatuses, and non-transitory computer-readable medium described herein may further include operations, features, means, or instructions for receiving, from the first UE via the sidelink transmission, a sidelink modification message indicating for the second UE to reconfigure a wireless connection between the first UE and the second UE.

Some examples of the method, apparatuses, and non-transitory computer-readable medium described herein may further include operations, features, means, or instructions for initiating a timer based on the first handover procedure and identifying an interruption of data transfer between the first UE and the second UE, identifying an expiration of the timer based on initiating the timer, and releasing a wireless connection between the first UE and the second UE based on identifying the expiration of the timer, where performing the second handover procedure or the reselection procedure may be based on releasing the wireless connection.

Some examples of the method, apparatuses, and non-transitory computer-readable medium described herein may further include operations, features, means, or instructions for communicating with the first UE, the first base station, the second base station, an additional UE, an additional base station, or any combination thereof, based on performing the second handover procedure, the reselection procedure, or both.

Some examples of the method, apparatuses, and non-transitory computer-readable medium described herein may further include operations, features, means, or instructions for receiving, from the first UE, an RRC message including an indication of the first handover procedure, an identifier associated with the second base station, or both, where the indication to perform the second handover procedure, the reselection procedure, or both, may be based on the indication of the first handover procedure, the identifier associated with the second base station, or both.

Some examples of the method, apparatuses, and non-transitory computer-readable medium described herein may further include operations, features, means, or instructions for receiving, from the second UE based on identifying an interruption of data transfer between the first UE and the second UE, an RRC message including an indication of a completion of the first handover procedure, an indication of an identifier associated with the second base station, or both, transmitting, to the first UE, a request to reestablish wireless communications between the first UE and the second UE based on the RRC message, and communicating with the first UE via the sidelink communication link based on receiving the request.

Some examples of the method, apparatuses, and non-transitory computer-readable medium described herein may further include operations, features, means, or instructions for suspending wireless communications between the first UE and the second UE without releasing a wireless connection between the first UE and the second UE based on receiving the RRC message, where receiving the RRC message may be based on suspending the wireless communications.

Some examples of the method, apparatuses, and non-transitory computer-readable medium described herein may further include operations, features, means, or instructions for communicating with the second base station via the first UE based on communicating with the first UE, where the first UE may be configured to relay wireless communications between the second UE and the second base station via at least the sidelink communication link between the first UE and the second UE.

In some examples of the method, apparatuses, and non-transitory computer-readable medium described herein, the second UE transmits the request based on identifying a priority associated with the first UE.

Some examples of the method, apparatuses, and non-transitory computer-readable medium described herein may further include operations, features, means, or instructions for receiving, from the first UE based on identifying an interruption of data transfer between the first UE and the second UE, an RRC message including an indication of a failure of the first handover procedure and releasing a wireless connection between the first UE and the second UE based on receiving the indication of the failure of the first handover procedure, where performing the second handover procedure or the reselection procedure may be based on releasing the wireless connection.

A method for wireless communication at a second UE is described. The method may include communicating with a first base station via a first UE, where the first UE is configured to relay wireless communications between the second UE and the first base station via at least a sidelink communication link between the first UE and the second UE, receiving, from the first UE, an RRC message including an indication for the second UE to perform a handover procedure from the first UE to an additional wireless device, and performing the handover procedure from the first UE to the additional wireless device based on receiving the RRC message.

An apparatus for wireless communication at a second UE is described. The apparatus may include a processor, memory in electronic communication with the processor, and instructions stored in the memory. The instructions may be executable by the processor to cause the apparatus to communicate with a first base station via a first UE, where the first UE is configured to relay wireless communications between the second UE and the first base station via at least a sidelink communication link between the first UE and the second UE, receive, from the first UE, an RRC message including an indication for the second UE to perform a handover procedure from the first UE to an additional wireless device, and perform the handover procedure from the first UE to the additional wireless device based on receiving the RRC message.

Another apparatus for wireless communication at a second UE is described. The apparatus may include means for communicating with a first base station via a first UE, where the first UE is configured to relay wireless communications between the second UE and the first base station via at least a sidelink communication link between the first UE and the second UE, means for receiving, from the first UE, an RRC message including an indication for the second UE to perform a handover procedure from the first UE to an additional wireless device, and means for performing the handover procedure from the first UE to the additional wireless device based on receiving the RRC message.

A non-transitory computer-readable medium storing code for wireless communication at a second UE is described. The code may include instructions executable by a processor to communicate with a first base station via a first UE, where the first UE is configured to relay wireless communications between the second UE and the first base station via at least a sidelink communication link between the first UE and the second UE, receive, from the first UE, an RRC message including an indication for the second UE to perform a handover procedure from the first UE to an additional wireless device, and perform the handover procedure from the first UE to the additional wireless device based on receiving the RRC message.

In some examples of the method, apparatuses, and non-transitory computer-readable medium described herein, the additional wireless device includes a third UE and the method, apparatuses, and non-transitory computer-readable medium may include further operations, features, means, or instructions for transmitting, to the third UE based on receiving the RRC message, a request to establish wireless communications with the third UE and communicating with the third UE via an additional sidelink communication link between the second UE and the third UE based on transmitting the request.

Some examples of the method, apparatuses, and non-transitory computer-readable medium described herein may further include operations, features, means, or instructions for communicating with the first base station, a second base station, or both, via the third UE based on communicating with the third UE, where the third UE may be configured to relay wireless communications between the second UE and the first base station, the second base station, or both, via at least the additional sidelink communication link between the second UE and the third UE.

In some examples of the method, apparatuses, and non-transitory computer-readable medium described herein, the additional wireless device includes the first base station and the method, apparatuses, and non-transitory computer-readable medium may include further operations, features, means, or instructions for transmitting, based on receiving the RRC message, a request to establish wireless communications with the first base station, the second base station, or both and communicating with the first base station, the second base station, or both, via one or more Uu communication links based on transmitting the request.

Some examples of the method, apparatuses, and non-transitory computer-readable medium described herein may further include operations, features, means, or instructions for releasing a wireless connection between the second UE and the first UE based on receiving the RRC message, where performing the handover procedure may be based on releasing the wireless connection.

In some examples of the method, apparatuses, and non-transitory computer-readable medium described herein, the RRC message includes a first identifier associated with the second UE, a second identifier associated with the additional wireless device, or both, and performing the handover procedure from the first UE to the additional wireless device may be based on the first identifier, the second identifier, or both.

A method for wireless communication at a second base station is described. The method may include generating an RRC message including an indication for a second UE to perform a handover procedure, where the second UE is in wireless communication with a first base station via at least a sidelink communication link between the second UE and a first UE, where the handover procedure is associated with a handover of the second UE from the first UE to a third UE, transmitting the RRC message to the third UE based on generating the RRC message, receiving, from the third UE, an uplink transmission indicating a completion of the handover procedure, and communicating with the second UE, the third UE, or both, based on receiving the uplink transmission.

An apparatus for wireless communication at a second base station is described. The apparatus may include a processor, memory in electronic communication with the processor, and instructions stored in the memory. The instructions may be executable by the processor to cause the apparatus to generate an RRC message including an indication for a second UE to perform a handover procedure, where the second UE is in wireless communication with a first base station via at least a sidelink communication link between the second UE and a first UE, where the handover procedure is associated with a handover of the second UE from the first UE to a third UE, transmit the RRC message to the third UE based on generating the RRC message, receive, from the third UE, an uplink transmission indicating a completion of the handover procedure, and communicate with the second UE, the third UE, or both, based on receiving the uplink transmission.

Another apparatus for wireless communication at a second base station is described. The apparatus may include means for generating an RRC message including an indication for a second UE to perform a handover procedure, where the second UE is in wireless communication with a first base station via at least a sidelink communication link between the second UE and a first UE, where the handover procedure is associated with a handover of the second UE from the first UE to a third UE, means for transmitting the RRC message to the third UE based on generating the RRC message, means for receiving, from the third UE, an uplink transmission indicating a completion of the handover procedure, and means for communicating with the second UE, the third UE, or both, based on receiving the uplink transmission.

A non-transitory computer-readable medium storing code for wireless communication at a second base station is described. The code may include instructions executable by a processor to generate an RRC message including an indication for a second UE to perform a handover procedure, where the second UE is in wireless communication with a first base station via at least a sidelink communication link between the second UE and a first UE, where the handover procedure is associated with a handover of the second UE from the first UE to a third UE, transmit the RRC message to the third UE based on generating the RRC message, receive, from the third UE, an uplink transmission indicating a completion of the handover procedure, and communicate with the second UE, the third UE, or both, based on receiving the uplink transmission.

In some examples of the method, apparatuses, and non-transitory computer-readable medium described herein, communicating with the second UE, the third UE, or both may include operations, features, means, or instructions for communicating with the third UE via a Uu communication link between the third UE and the second base station and communicating with the second UE via the third UE, where the third UE may be configured to relay wireless communications between the second UE and the second base station via at least an additional sidelink communication link between the second UE and the third UE.

Some examples of the method, apparatuses, and non-transitory computer-readable medium described herein may further include operations, features, means, or instructions for receiving, from the second UE via the third UE, a second RRC message including an indication of the completion of the handover procedure from the first UE to the third UE, where communicating with the second UE may be based on receiving the second RRC message.

Some examples of the method, apparatuses, and non-transitory computer-readable medium described herein may further include operations, features, means, or instructions for receiving, from the first UE, a second RRC message including an indication of the completion of the handover procedure of the second UE from the first UE to the third UE, where communicating with the second UE may be based on receiving the second RRC message.

In some examples of the method, apparatuses, and non-transitory computer-readable medium described herein, the RRC message includes a first identifier associated with the second UE, a second identifier associated with the third UE, or both, and communicating with the second UE, the third UE, or both, may be based on the first identifier, the second identifier, or both.

Some examples of the method, apparatuses, and non-transitory computer-readable medium described herein may further include operations, features, means, or instructions for communicating with the first base station, where generating the RRC message may be based on communicating with the first base station.

### BRIEF DESCRIPTION OF THE DRAWINGS

FIG. 1 illustrates an example of a wireless communications system that supports techniques for remote user equipment (UE) handover due to relay UE mobility in accordance with aspects of the present disclosure.
FIG. 2 illustrates an example of a relay configuration that supports techniques for remote UE handover due to relay UE mobility in accordance with aspects of the present disclosure.
FIG. 3 illustrates an example of a wireless communications system that supports techniques for remote UE handover due to relay UE mobility in accordance with aspects of the present disclosure.
FIG. 4 illustrates an example of a process flow that supports techniques for remote UE handover due to relay UE mobility in accordance with aspects of the present disclosure.
FIG. 5 illustrates an example of a process flow that supports techniques for remote UE handover due to relay UE mobility in accordance with aspects of the present disclosure.
FIG. 6 illustrates an example of a process flow that supports techniques for remote UE handover due to relay UE mobility in accordance with aspects of the present disclosure.
FIGs. 7 and 8 show block diagrams of devices that support techniques for remote UE handover due to relay UE mobility in accordance with aspects of the present disclosure.
FIG. 9 shows a block diagram of a communications manager that supports techniques for remote UE handover due to relay UE mobility in accordance with aspects of the present disclosure.
FIG. 10 shows a diagram of a system including a device that supports techniques for remote UE handover due to relay UE mobility in accordance with aspects of the present disclosure.
FIGs. 11 and 12 show block diagrams of devices that support techniques for remote UE handover due to relay UE mobility in accordance with aspects of the present disclosure.
FIG. 13 shows a block diagram of a communications manager that supports techniques for remote UE handover due to relay UE mobility in accordance with aspects of the present disclosure.
FIG. 14 shows a diagram of a system including a device that supports techniques for remote UE handover due to relay UE mobility in accordance with aspects of the present disclosure.
FIGs. 15 through 18 show flowcharts illustrating methods that support techniques for remote UE handover due to relay UE mobility in accordance with aspects of the present disclosure.

### DETAILED DESCRIPTION

Some wireless communications systems may support sidelink relays in which a relay user equipment (UE) may forward, or relay, wireless communications between a base station and a remote UE. Among other advantages, the use of sidelink relays may enable remote UEs to reduce a transmission power of uplink transmissions, thereby reducing a power consumption at the remote UE. However, the use of sidelink relays may result in complexities in the context of performing cell handover procedures. In some wireless communications systems, base stations and UEs may be enabled with "group mobility," in which a remote UE may remain communicatively coupled to a relay UE as the relay UE performs a handover from one base station to another. However, many wireless communications systems do not support group mobility. As such, most wireless communications systems result in a loss of wireless communications at a remote UE when a relay UE performs a handover procedure from one base station to another. The loss in wireless communications at the remote UE interrupts data transfer, and decreases a quality of user experience.

Accordingly, techniques described herein are directed to improved handover procedures for both relay UEs and remote UEs coupled to the relay UEs. In particular, techniques described herein may provide for handover procedures at a remote UE coupled to a relay UE which may reduce, or eliminate, interruptions of data transfer at the remote UE in cases where the relay UE performs a handover procedure, the remote UE is to connect with a different relay UE, or both.

In some aspects, the network (e.g., base stations) of a wireless communications system may determine that a remote UE communicatively coupled to a relay UE is to perform a handover procedure and/or reselection procedure (e.g., when a relay UE performs a handover from a source base station to a target base station). In some cases, the network may determine that the remote UE is to transition from one relay UE to another (e.g., as a result of movement of the remote UE, source relay UE, and/or target relay UE). In these scenarios, the remote UE may receive and/or identify an indication of a trigger of the handover procedure/reselection procedure from the source relay UE. For example, the UE may identify a trigger for the handover procedure based on an interruption in communications with the source relay UE. The remote UE may then release and/or suspend communications over a wireless connection between the remote UE and the source relay UE based on the trigger. Subsequently, the remote UE may perform the handover procedure and/or reselection procedure in order to re-establish wireless communications with the source relay UE (e.g., PC5 to PC5 handover), establish wireless communications with a different target relay UE (e.g., PC5 to PC5 handover), and/or establish direct wireless communications with a base station (e.g., PC5 to Uu handover).

Aspects of the disclosure are initially described in the context of wireless communications systems. Additional aspects of the disclosure are described in the context of an example relay configuration and example process flows. Aspects of the disclosure are further illustrated by and described with reference to apparatus diagrams, system diagrams, and flowcharts that relate to techniques for remote UE handover due to relay UE mobility.

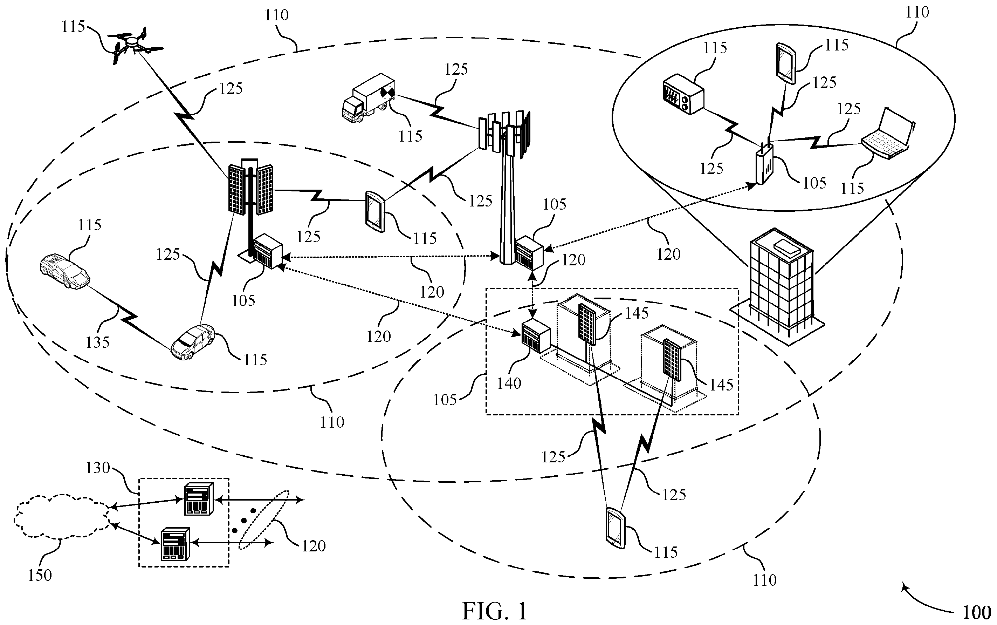

**FIG. 1** illustrates an example of a wireless communications system 100 that supports techniques for remote UE handover due to relay UE mobility in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

In some aspects, the UEs 115 and the base stations 105 of the wireless communications system 100 may be configured to support improved handover procedures for both relay UEs 115 and remote UEs 115 coupled to the relay UEs 115. In particular, the wireless communications system 100 may provide for handover procedures at a remote UE 115 coupled to a relay UE 115 which may reduce, or eliminate, interruptions of data transfer at the remote UE 115 in cases where the relay UE 115 performs a handover procedure, the remote UE 115 is to connect with a different relay UE 115, or both.

For example, a relay UE 115 (e.g., source relay UE 115) of the wireless communications system 100 may be configured to relay (e.g., forward) communications between a base station 105 (e.g., source base station 105) and a remote UE 115. In some aspects, the network (e.g., base stations 105) of the wireless communications system 100 may determine that the remote UE 115 communicatively coupled to the relay UE 115 is to perform a handover procedure and/or reselection procedure. For instance, the source base station 105 may determine that the remote UE 115 is to perform a handover procedure and/or reselection procedure from the source relay UE 115 when the source relay UE 115 performs a handover from the source base station 105 to a target base station 105. In some cases, the network (e.g., base stations 105) may determine that the remote UE 115 is to transition from one relay UE 115 to another (e.g., as a result of movement of the remote UE 115, the source relay UE 115, and/or a target relay UE 115).

In these scenarios, the remote UE 115 may receive and/or identify an indication of a trigger of the handover procedure/reselection procedure from the source relay UE 115. For example, the remote UE 115 may identify a trigger for the handover procedure based on an interruption in communications with the source relay UE 115. The remote UE 115 may then release and/or suspend communications over a wireless connection between the remote UE and the source relay UE 115 based on the trigger. Subsequently, the remote UE 115 may perform the handover procedure and/or reselection procedure in order to re-establish wireless communications with the source relay UE 115 (e.g., PC5 to PC5 handover), establish wireless communications with a different target relay UE 115 (e.g., PC5 to PC5 handover), and/or establish direct wireless communications with a base station 105 (e.g., PC5 to Uu handover).

Techniques described herein may enable improved handover procedures for both remote UEs 115 and relay UEs 115 in the context of wireless communications systems which do not support group mobility. In particular, techniques described herein may support improved handover procedures which may reduce, or eliminate, interruptions of data transfer at a remote UE 115 which are attributable to handover procedures of a relay UE 115 or the remote UE 115. By reducing interruptions of data transfer at the remote UE 115 which are attributable to handover procedures, techniques described herein may enable improved service continuity, decrease power consumption attributable to handover procedures, and improve user experience.

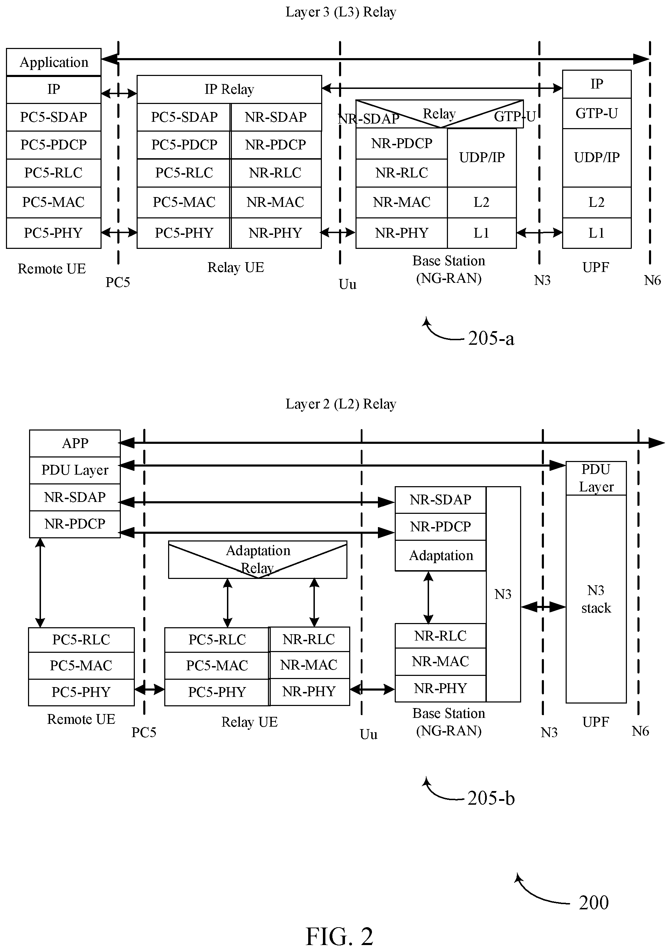

FIG. 2 illustrates an example of a relay configuration 200 that supports techniques for remote UE handover due to relay UE mobility in accordance with aspects of the present disclosure. The relay configuration 200 may implement, or be implemented by, aspects of the wireless communications system 100.

In some aspects, the relay configuration 200 illustrates relay schemes 205-a and 205-b for performing handover procedures for a remote UE and a relay UE which is configured to relay communications between the remote UE and a base station. In particular, the relay scheme 205-a illustrates layer 3 (L3) relay, and the relay scheme 205-b illustrates layer 2 (L2) relay. The relay schemes 205 illustrate various signaling carried out throughout the protocol stacks of the various devices which is used to carry out the respective handovers.

In each of the relay schemes 205, a remote UE may be communicatively coupled to a relay UE via a PC5 link (e.g., sidelink communication link). The relay UE may be communicatively coupled to a base station via a Uu link (e.g., uplink/downlink communication link), and may be configured to relay wireless communications between the remote UE and the base station. The base station may be communicatively coupled to a user plane function (UPF) of a wireless communications system via an N3 interface, and the UPF may be coupled to the data network via an N6 interface.

In the context of a relay for L3 relay illustrated in relay scheme 205-a, the relay UE may be configured to relay (e.g., forward) traffic from the remote UE to the core network using its own protocol data unit (PDU) session. In particular, the traffic from the remote UE may be relayed above the packet data convergence protocol (PDCP) layer. In some aspects, the remote UE and the relay UE may be configured to perform local routing between the respective devices. Moreover, non-IP traffic may be supported by encapsulation in IP, a dedicated PDU session at the remote UE, or both. Comparatively, referring to relay scheme 205-b for L2 relay, the relay may be performed below the PDCP layer. In particular, the relay UE may forward the PC5 bearer and the Uu bearer using an adaptation layer function. In some aspects, dedicated radio bearers (DRBs) of the remote UE may be controlled by the base station (e.g., NG-RAN). Additionally, in L2 relay, all traffic may terminate at the 5GC, and there may be no direct communication between the remote UE or to the relay UE.

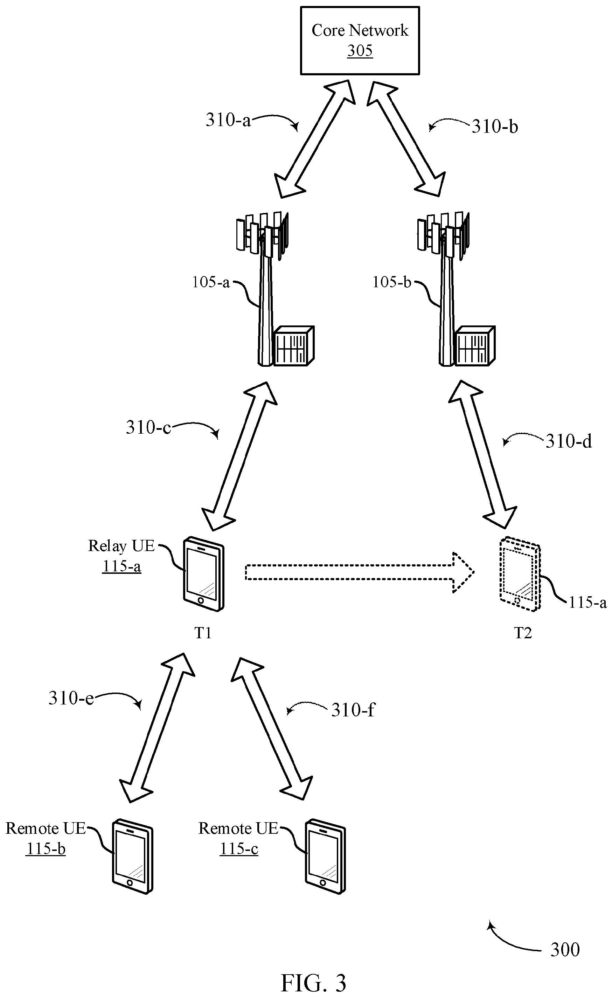

FIG. 3 illustrates an example of a wireless communications system 300 that supports techniques for remote UE handover due to relay UE mobility in accordance with aspects of the present disclosure. In some aspects, aspects of the wireless communications system 300 may implement, or be implemented by, aspects of the wireless communications system 100, relay configuration 200, or both.

The wireless communications system 300 may include a first base station 105-a, a second base station 105-b, a relay UE 115-a, remote UEs 115-b and 115-c, and a core network 305, which may be examples of UEs 115, base stations 105, and other wireless devices as described with reference to FIGs. 1 and 2.

In some aspects, the first base station 105-a and the second base station 105-b may communicate with the core network 305 using a communication link 310-a and a communication link 310-b, respectively. The communication links 310-a and 310-b may be examples of an N3 interface between the base stations 105 and the core network 305 of the wireless communications system 300.

The relay UE 115-a may communicate with the first base station 105-a (e.g., source base station 105-a) using a communication link 310-c at time T1 and may communicate with the second base station 105-b (e.g., target base station 105-b) using a communication link 310-d at time T2. The communication links 310-c and 310-d may include examples of NR or LTE links between the relay UE 115-a and the base stations 105. In some cases, the communication links 310-c and 310-d may include examples of access links (e.g., Uu links) which may include bi-directional links that enable both uplink and downlink communication. For example, the relay UE 115-a may transmit uplink signals, such as uplink control signals or uplink data signals, to the first base station 105-a using the communication link 310-c, and the first base station 105-a may transmit downlink signals, such as downlink control signals or downlink data signals, to the relay UE 115-a using the communication link 310-c. In some aspects, the relay UE 115-a may be communicatively coupled to a first remote UE 115-b and a second remote UE 115-c via communication links 310-e and 310-f, respectively. The communication links 310-e and 310-f may include examples of sidelink communication links or PC5 links between the respective UEs 115.

In some aspects, the relay UE 115-a may be configured to forward, or relay, wireless communications between the first base station 105-a and the remote UEs 115-b and 115-c. For example, the remote UE 115-b may be configured to transmit data to the relay UE 115-a via communication link 310-e, and the relay UE 115 may be configured to forward (e.g., relay) the data received from the remote UE 115-b to the first base station 105-a via the communication link 310-c. Conversely, the first base station 105-a may be configured to transmit data (e.g., downlink signals) to the relay UE 115-a via communication link 310-c, and the relay UE 115 may be configured to forward (e.g., relay) the data received from the first base station 105-a to the remote UE 115-b via the via the communication link 310-e. As noted previously herein, the use of sidelink relays (e.g., the use of the relay UE 115-a) may enable the remote UEs 115-b and 115-c to reduce a transmission power of uplink transmissions, thereby reducing a power consumption at the remote UEs 115-b and 115-c.

In some wireless communications systems, base stations 105 and UEs 115 may be enabled with "group mobility," in which a remote UE 115 may remain communicatively coupled to a relay UE 115 as the relay UE 115 performs a handover from one base station 105 to another. For example, in cases where the wireless communications system 300 is enabled with group mobility, the remote UEs 115-b and 115-c may remain communicatively coupled to the relay UE 115-a as the relay UE 115-a performs a handover procedure from the first base station 105-a (e.g., source base station 105-a) to the second base station 105-b (e.g., target base station 105-b) between time T1 and time T2. In some aspects, the handover procedure at the relay UE 115-a may be attributable to the movement (e.g., mobility) of the relay UE 115-a within the wireless communications system 300. With group mobility, the network (e.g., base stations 105-a, 105-b, core network 305) of the wireless communications system 300 may be configured to handover the remote UEs 115-b and 115-c to the same target cell (e.g., target base station 105-b) as the relay UE 115-b. In this regard, in the example shown in FIG. 3, group mobility may enable the remote UEs 115-b and 115-c to perform the handover procedure along with the relay UE 115-b so that the relay UE 115-b may relay (e.g., forward) wireless communications between the second base station 105-b and the remote UEs 115-b and 115-c following the handover procedure at time T2.

However, some wireless communications systems may not support group mobility. That is, some wireless communications systems may be unable to maintain data transfer between the remote UEs 115-b and 115-c and the relay UE 115-a while the relay UE 115-b performs a handover procedure from the first base station 105-a to the second base station 105-b, as illustrated in FIG. 3. As such, some wireless communications systems result in a loss of wireless communications at the remote UEs 115-b and 115-c when the relay UE 115-a performs a handover procedure from the first base station 105-a to the second base station 105-b. The loss in wireless communications at the remote UEs 115-b and 115-c may interrupt data transfer, and decrease a quality of user experience of the remote UEs 115-b and 115-c.

Accordingly, in some aspects, the UEs 115 and the base stations 105 of the wireless communications system 300 may be configured to support improved handover procedures for both the relay UE 115-a and the remote UEs 115-b and 115-c. In particular, the wireless communications system 300 may provide for handover procedures at the remote UE 115-b and 115-c which may reduce, or eliminate, interruptions of data transfer at the remote UEs 115-b and 115-c in cases where the relay UE 115-a performs a handover procedure, in cases where the remote UEs 115-b and/or 115-c are to connect with a different relay UE 115, or both.

For example, the relay UE 115-a (e.g., source relay UE 115-a) of the wireless communications system 300 may be configured to relay (e.g., forward) communications between the first base station 105-a (e.g., source base station 105-a) and the remote UE 115-b. In some aspects, the network (e.g., base stations 105-a and 105-b, core network 305) of the wireless communications system 300 may determine that the remote UE 115-b communicatively coupled to the relay UE 115-a is to perform a handover procedure and/or reselection procedure. For instance, as shown in FIG. 3, the source base station 105-a may determine that the remote UE 115-a is to perform a handover procedure and/or reselection procedure when the source relay UE 115-a performs a handover from the source base station 105-a to a target base station 105-b between time T1 and time T2. Thus, the network may determine that the remote UE 115-b is to perform a handover procedure and/or reselection procedure due to the movement of the relay UE 115-a. Additionally or alternatively, the network (e.g., base stations 105-a and 105-b, core network 305) may determine that the remote UE 115-b is to transition from the source relay UE 115-a to a target relay UE 115 (not shown) as a result of movement of the remote UE 115-a, movement of the source relay UE 115-a, movement of the target relay UE 115, or any combination thereof.

In these scenarios, the remote UE 115-b may receive and/or identify an indication of a trigger of the handover procedure/reselection procedure from the source relay UE 115-a. For example, the remote UE 115-b may identify a trigger for the handover/reselection procedure based on an interruption in communications with the source relay UE 115-a. Upon identifying the trigger for the handover and/or reselection procedure, the remote UE 115-b may release and/or suspend communications over the communication link 310-e between the remote UE 115-b and the source relay UE 115-a.

Subsequently, the remote UE 115-b may perform the handover procedure and/or reselection procedure in order to re-establish wireless communications with another wireless communications device of the wireless communications system 300. For example, in some cases, the remote UE 115-b may re-establish communications with the source relay UE 115-a (e.g., PC5 to PC5 handover). In such cases, the remote UE 115-b may communicate with the target base station 105-b via the source relay UE 115-a following the handover procedure at the source relay UE 115-a. In other cases, the remote UE 115-b may perform the handover and/or reselection procedure to establish wireless communications with a different relay UE 115 (e.g., PC5 to PC5 handover from source relay UE 115-a to target relay UE 115). In such cases, the target relay UE 115 may be communicatively coupled to the first base station 105-a, the second base station 105-b, or another base station 105. In additional or alternative cases, the remote UE 115-b may perform the handover and/or reselection procedure to establish direct wireless communications with a base station 105 (e.g., PC5 to Uu handover). For instance, upon releasing and/or suspending communications with the source relay UE 115-a, the remote UE 115-b may perform a handover and/or reselection procedure to establish direct wireless communications with the first base station 105-a, the second base station 105-b, a different base station 105, or any combination thereof.

Techniques described herein may enable improved handover procedures for both the remote UEs 115-b and 115-c and the relay UE 115-a in the context of wireless communications systems (e.g., wireless communications system 300) which do not support group mobility. In particular, techniques described herein may support improved handover procedures which may reduce, or eliminate, interruptions of data transfer at the remote UEs 115-b and 115-c which are attributable to handover procedures of the relay UE 115-a and/or the remote UEs 115-b and 115-c themselves. By reducing interruptions of data transfer at the remote UEs 115-b and 115-c which are attributable to handover procedures, techniques described herein may enable improved service continuity, decrease power consumption attributable to handover procedures, and improve user experience.

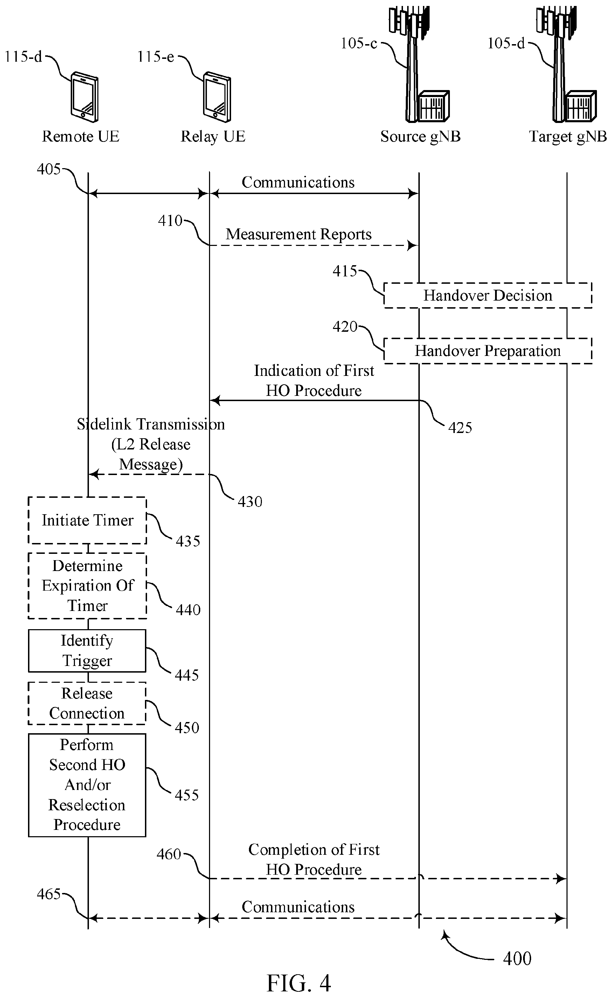

**FIG. 4** illustrates an example of a process flow 400 that supports techniques for remote UE handover due to relay UE mobility in accordance with aspects of the present disclosure. In some examples, process flow 400 may implement, or be implemented by, aspects of wireless communications systems 100, relay configuration 200, wireless communications system 300, or any combination thereof. For example, the process flow 400 may illustrate a remote UE 115-d performing a handover and/or reselection procedure due to a relay UE 115-e performing a handover procedure from a source base station 105-c to a target base station 105-d, as described with reference to FIGs. 1-3.

In some cases, process flow 400 may include a remote UE 115-d, a relay UE 115-c, a source base station 105-c, and a target base station 105-d, which may be examples of corresponding devices as described herein. For example, in some cases, the remote UE 115-d and the relay UE 115-e illustrated in FIG. 4 may be examples of the remote UE 115-b and the relay UE 115-a, respectively, as illustrated in FIG. 3. Similarly, the source base station 105-c and the target base station 105-d illustrated in FIG. 4 may be examples of the source base station 105-a and the target base station 105-b, respectively, as illustrated in FIG. 3.

In some examples, the operations illustrated in process flow 400 may be performed by hardware (e.g., including circuitry, processing blocks, logic components, and other components), code (e.g., software or firmware) executed by a processor, or any combination thereof. Alternative examples of the following may be implemented, where some steps are performed in a different order than described or are not performed at all. In some cases, steps may include additional features not mentioned below, or further steps may be added.

At 405, the relay UE 115-e may be configured to communicate with the source base station 105-c. In some aspects, the relay UE 115-e may be configured to relay (e.g., forward) wireless communications between the source base station 105-c and the remote UE 115-d. For example, the relay UE 115-e may be configured to relay wireless communications between the source base station 105-c and the remote UE 115-d via at least a sidelink communication link between the remote UE 115-d and the relay UE 115-e, a Uu link between the relay UE 115-e and the source base station 105-c, or both. In this regard, the remote UE 115-d may communicate with the source base station 105-c (e.g., exchange uplink and/or downlink signals) via at least the sidelink communication link between the remote UE 115-d and the relay UE 115-e.

In some aspects, the handover procedures and/or reselection procedures illustrated in process flow 400 may apply to both L2 and L3 relays. In this regard, aspects of the process flow 400 may implement, or be implemented by, aspects the relay scheme 205-a and/or the relay scheme 205-b, as illustrated in FIG. 2.

At 410, the relay UE 115-e may transmit one or more measurement reports to the source base station 105-c. In some aspects, the measurement reports may include measurements associated with signals (e.g., reference signals) received from the source base station 105-c, the target base station 105-d, or both. For example, the relay UE 115-e may perform measurements (e.g., received signal strength indicator (RSSI), reference signal received power (RSRP), reference signal received quality (RSRQ), SNR, SINR, channel quality indicator (CQI)) on reference signals received from the source base station 105-c and/or the target base station 105-d. In this example, the relay UE 115-c may transmit measurement reports indicating the performed measurements. In some aspects, the source base station 105-c and/or the target base station 105-d may use information (e.g., measurements) included within the measurement reports in order to guide decisions regarding handovers at the relay UE 115-e.

At 415, the source base station 105-c and/or the target base station 105-c may determine that the relay UE 115-c is to perform a first handover procedure (e.g., handover decision). In some aspects, the source base station 105-c and/or the target base station 105-c may make the handover decision based on the measurement reports received at 410. For example, the measurement reports may indicate a higher signal strength or signal quality associated with wireless communications carried out with the target base station 105-d as compared to the source base station 105-c. In such cases, the base stations 105 may determine that the relay UE 115-e is to perform a first handover procedure from the source base station 105-c to the target base station 105-d.

At 420, the source base station 105-c and/or the target base station 105-d may prepare for the first handover procedure at the relay UE 115-e (e.g., handover preparation). The base stations 105 may perform the handover preparation based on receiving the measurement reports at 410, making the handover decision at 415, or both. While performing the handover preparation, the source base station 105-c and/or the target base station 105-d may generate a handover command which will be transmitted to the relay UE 115-e.

At 425, the relay UE 115-e may receive, from the source base station 105-c, an indication for the relay UE 115-e to perform the first handover procedure from the source base station 105-c to the target base station 105-d (e.g., handover command). In some aspects, the source base station 105-c may transmit, and the relay UE 115-e may receive, the indication to perform the first handover procedure at 435 based on transmitting/receiving the measurement reports at 410, making the handover decision at 415, performing handover preparation at 420, or any combination thereof. The indication to perform the first handover procedure may be transmitted to the relay UE 115-e via a handover command, which was generated during handover preparation performed at 420. In some aspects, the indication for the relay UE 115-e to perform the first handover procedure may be communicated via an RRC message (e.g., RRCReconfiguration, RRCReconfiguration WithSync).

At 430, the relay UE 115-c may transmit a sidelink transmission (e.g., sidelink release message, L2 release message) including a trigger for the remote UE 115-d to perform a second handover procedure, a reselection procedure, or both. The relay UE 115-c may transmit the sidelink transmission including the trigger via the sidelink communication link between the relay UE 115-e and the remote UE 115-d. In some aspects, the relay UE 115-e may transmit the sidelink transmission including the trigger based on receiving the indication for the relay UE 115-e to perform the first handover procedure at 425.

In some aspects, the sidelink transmission (e.g., sidelink release message) including the trigger for the remote UE 115-d to perform the second handover procedure and/or the reselection procedure may include an L2 release message. For example, the sidelink transmission transmitted at 430 may include an L2 release message indicating for the remote UE 115-d to release a wireless connection (e.g., sidelink communication link) between the remote UE 115-d and the relay UE 115-e. In this regard, the relay UE 115-e may release a unicast PC5 connection with the remote UE 115-d (and any other remote UEs 115 communicatively coupled to the relay UE 115-e) via the L2 release message.

In cases where the remote UE 115-d successfully receives and/or decodes (e.g., demodulates) the sidelink transmission including the trigger (e.g., L2 release message) at 430, the process flow 400 may proceed to 445 where the remote UE 115-d identifies the trigger, as will be described in further detail herein. However, in some cases, the remote UE 115-d may not successfully receive and/or decode the sidelink transmission including the trigger (e.g., L2 release message) at 430. In such cases, the process flow 400 may proceed to 435.

In some aspects, the relay UE 115-e may transmit a sidelink modification message indicating for the remote UE 115-d to reconfigure a wireless connection between the remote UE 115-d and the relay UE 115-e. In some aspects, the relay UE 115-e may transmit the sidelink modification message within the same sidelink transmission including the sidelink release message (e.g., L2 release message).

At 435, the remote UE 115-d may initiate a timer (e.g., keep-alive timer) upon identifying an interruption of data transfer between the remote UE 115-d and the relay UE 115-e. In some aspects, the timer (e.g., keep-alive timer) may include a timer which tracks a duration of time in which the remote UE 115-d has not successfully transmitted and/or received sidelink communications with the relay UE 115-e. Moreover, the timer may define a duration of time (e.g., maximum duration of time) in which the remote UE 115-d may attempt to maintain a communication link with the relay UE 115-e before the remote UE 115-d performs a handover and/or reselection procedure to establish a new wireless communication link with the relay UE 115-e and/or a new wireless communication link with a different wireless device (e.g., different relay UE 115, source base station 105-c, target base station 105-d, and the like). In some aspects, a duration of the timer may be configured (e.g., pre-configured) at the remote UE 115-d, signaled to the remote UE 115-d (e.g., via RRC signaling or other control signaling), or both. In some examples, the timer duration may be standardized or provided to the UE 115-d via configuration signaling.

In some cases, the remote UE 115-d may initiate the timer based on the first handover procedure performed at the relay UE 115-e. For example, the relay UE 115-e may initiate the first handover procedure from the source base station 105-c to the target base station 105-d, which may cause an interruption (e.g., termination) of data transfer between the remote UE 115-d and the relay UE 115-e. In some cases, initiation of the first handover procedure at the relay UE 115-c may cause the remote UE 115-d to miss, or otherwise fail to receive the sidelink transmission (e.g., L2 release message) at 430. In this example, the remote UE 115-d may initiate a keep-alive timer based on the first handover procedure and upon identifying the interruption of data transfer with the relay UE 115-e.

In cases where the remote UE 115-d identifies data transfer has resumed between the remote UE 115-d and the relay UE 115-e, the remote UE 115-d may terminate the timer and resume wireless communications with the relay UE 115-e. Conversely, the remote UE 115-d may allow the timer to run while the remote UE 115-d determines that data transfer between the remote UE 115-d and the relay UE 115-e has been terminated, or otherwise continues to be interrupted.

At 440, the remote UE 115-d may identify an expiration of the timer. In some aspects, the remote UE 115-d may identify an expiration of the timer based on initiating the timer at 435, a defined duration of the timer, or both. Additionally or alternatively, the remote UE 115-d may identify the expiration of the timer based on identifying that data transfer between the remote UE 115-d and the relay UE 115-e continues to be interrupted.

At 445, the remote UE 115-d may identify the trigger for the remote UE 115-d to perform the second handover procedure and/or reselection procedure. In some aspects, the trigger for the remote UE 115-d to perform the second handover procedure and/or reselection procedure may be based on the first handover procedure at the relay UE 115-e. The second handover procedure and/or the reselection procedure may include a handover procedure and/or reselection procedure from the relay UE 115-c to the same relay UE 115-e, another relay UE 115 (e.g., relay handover/reselection procedure), the first and/or second base stations 105-c and 105-d (e.g., cell handover/reselection procedure), or any combination thereof.

In some aspects, the remote UE 115- may identify the trigger for the remote UE 115-d to perform the second handover procedure and/or reselection procedure based on receiving the sidelink transmission including the trigger (e.g., L2 release message) at 430, identifying the expiration of the timer at 440, or both. For example, in cases where the remote UE 115-d successfully receives and/or decodes the L2 release message at 430, the remote UE 115-d may identify the trigger based on receiving/decoding the L2 release message. By way of another example, in cases where the remote UE 115-d misses, or otherwise does not successfully receive and/or decode the L2 release message at 430, the remote UE 115-d may initiate the timer (e.g., keep-alive timer) at 435, and identify the expiration of the timer at 440. In this example, the remote UE 115-d may identify the trigger based on identifying the expiration of the timer at 440.

At 450, the remote UE 115-d may release the wireless connection (e.g., PC5 connection) with the relay UE 115-e. In some aspects, the remote UE 115-d may release the wireless connection (e.g., unicast PC5 connection) with the relay UE 115-e based on identifying the trigger for the second handover procedure and/or reselection procedure at 445. In this regard, the remote UE 115-d may release the wireless connection with the relay UE 115-e at 450 based on receiving the sidelink transmission including the trigger (e.g., L2 release message) at 430, initiating the timer at 435, identifying the expiration of the timer at 440, or any combination thereof.

At 455, the remote UE 115-d may perform the second handover procedure, the reselection procedure, or both (e.g., relay handover/reselection procedure, cell handover/reselection procedure). In some aspects, the remote UE 115-d may perform the second handover procedure and/or the reselection procedure based on receiving the sidelink transmission indicating the trigger (e.g., L2 release message) at 430, initiating the timer at 435, identifying an expiration of the timer at 440, identifying the trigger at 445, releasing the wireless connection with the relay UE 115-e at 450, or any combination thereof.

As noted previously herein, the remote UE 115-d may perform the second handover procedure and/or the reselection procedure with the same relay UE 115-e (e.g., PC5 to PC5 handover/reselection), a different relay UE 115 (e.g., PC5 to PC5 handover/reselection), the source base station 105-c (e.g., PC5 to Uu handover/reselection), the target base station 105-d (e.g., PC5 to Uu handover/reselection), a different base station 105 (e.g., PC5 to Uu handover/reselection), or any combination thereof. In this regard, the remote UE 115-d may perform a relay handover/reselection procedure to establish a sidelink relay connection with a relay UE 115 (e.g., relay UE 115-e or another relay UE 115-) and/or a cell handover/reselection procedure to establish a direct wireless connection with a base station 105 (e.g., source base station 105-c, target base station 105-d, another base station 105).

For example, in some cases, the remote UE 115-d may perform the second handover procedure and/or reselection procedure with the relay UE 115-e to re-establish wireless communications with the relay UE 115-e. In this example, the remote UE 115-d and the relay UE 115-e may perform the second handover procedure and/or the reselection procedure based on the relay UE 115-e performing the first handover procedure, based on the remote UE 115-d and/or the relay UE 115-e identifying an interruption in data transfer between the UEs 115, or both.

In additional or alternative implementations, the remote UE 115-d may perform the second handover procedure and/or the reselection procedure with a wireless communications device other than the relay UE 115-e. For example, in some cases, the remote UE 115-d may perform the second handover procedure and/or the reselection procedure with an additional relay UE 115 (e.g., PC5 to PC5 handover or reselection). In this example, the remote UE 115-d may perform the second handover procedure and/or reselection procedure with the additional relay UE 115 in order to communicate with the source base station 105-c, the target base station 105-d, or another base station 105 via the additional relay UE 115. By way of another example, the remote UE 115-d may perform the second handover procedure and/or the reselection procedure with the source base station 105-c, the target base station 105-d, and/or an additional base station 105 (e.g., PC5 to Uu handover or reselection). In such cases, the remote UE 115-d may perform the second handover procedure and/or reselection procedure with the respective base station 105 in order to establish wireless communications (e.g., direct uplink and downlink communications) with the respective base station 105.

At 460, the relay UE 115-e may transmit an uplink message to the target base station 105-d indicating a completion of the first handover procedure. In some aspects, the indication of the completion of the first handover procedure may be transmitted via a control message (e.g., RRC message, RRCReconfigurationComplete).

In cases where the relay UE 115-e performs the second handover procedure and/or the reselection procedure with the remote UE 115-d at 455, the relay UE 115-e may additionally transmit an indication of a completion of the second handover procedure. For example, the relay UE 115-e may indicate, to the target base station 105-d, that the relay UE 115-d has completed the first handover procedure with the target base station 105-d, the second handover procedure with the remote UE 115-d, the reselection procedure with the remote UE 115-d, or any combination thereof, via one or more control messages.

At 465, the relay UE 115-e may communicate with the target base station 105-d. Moreover, the remote UE 115-d may communicate with the relay UE 115-d, the target base station 105-d, or both. In some aspects, the communications between the remote UE 115-d, the relay UE 115-e, the target base station 105-d, or any combination thereof, may be carried out based on performance of the first handover procedure, transmitting/receiving the sidelink transmission at 430, identifying the trigger at 445, releasing the wireless connection at 450, performing the second handover procedure and/or reselection procedure at 455, transmitting/receiving the indication of the first handover procedure at 460, or any combination thereof.

In some aspects, the relay UE 115-e may be configured to relay (e.g., forward) wireless communications between the target base station 105-d and the remote UE 115-d. For example, the relay UE 115-e may be configured to relay wireless communications between the target base station 105-d and the remote UE 115-d via at least a sidelink communication link between the remote UE 115-d and the relay UE 115-e, a Uu link between the relay UE 115-e and the target base station 105-d, or both. In this regard, the remote UE 115-d may communicate with the target base station 105-d (e.g., exchange uplink and/or downlink signals) via at least the sidelink communication link between the remote UE 115-d and the relay UE 115-e.

Techniques described herein may enable improved handover procedures for both remote UEs 115 and relay UEs 115 in the context of wireless communications systems which do not support group mobility. In particular, techniques described herein may support improved handover procedures which may reduce, or eliminate, interruptions of data transfer at the remote UE 115-d which are attributable to a handover procedure at the relay UE 115-e. By reducing interruptions of data transfer at the remote UE 115-d which are attributable to handover procedures, techniques described herein may enable improved service continuity, decrease power consumption attributable to handover procedures, and improve user experience.

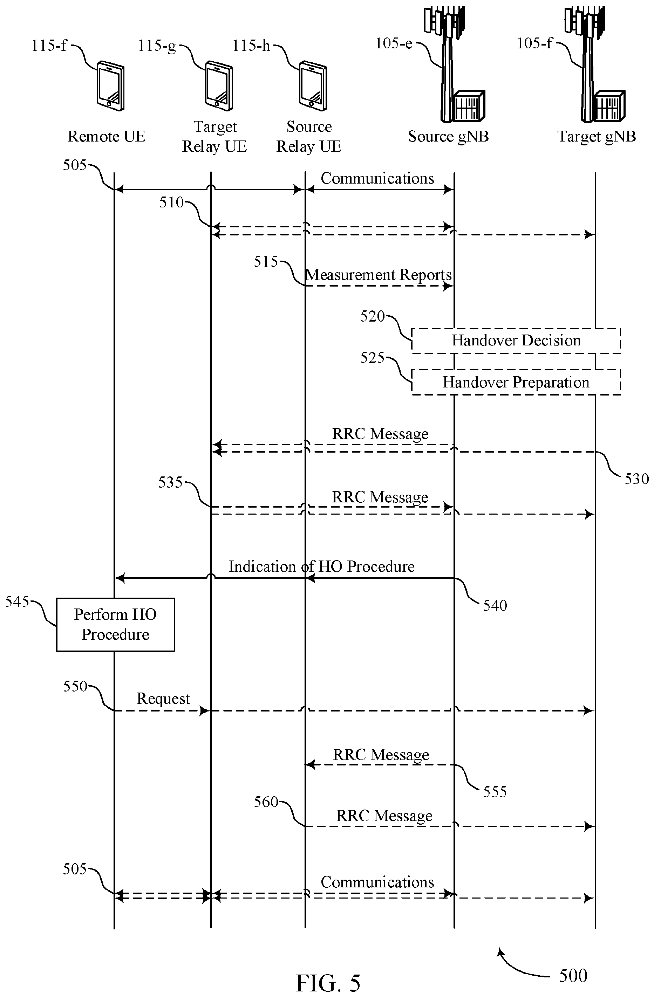

**FIG. 5** illustrates an example of a process flow 500 that supports techniques for remote UE handover due to relay UE mobility in accordance with aspects of the present disclosure. In some examples, process flow 500 may implement, or be implemented by, aspects of wireless communications systems 100, relay configuration 200, wireless communications system 300, process flow 400, or any combination thereof. For example, the process flow 500 may illustrate a remote UE 115-f performing a handover and/or reselection procedure from a source relay UE 115-g to a target relay UE 115-h and/or a base station 105, as described with reference to FIGs. 1-3.

In some cases, process flow 500 may include a remote UE 115-f, a target relay UE 115-g, a source relay UE 115-h, a source base station 105-e, and a target base station 105-f, which may be examples of corresponding devices as described herein. For example, in some cases, the remote UE 115-f and the source relay UE 115-h illustrated in FIG. 5 may be examples of the remote UE 115-b and the relay UE 115-a, respectively, as illustrated in FIG. 3. Similarly, the source base station 105-e and the target base station 105-f illustrated in FIG. 5 may be examples of the source base station 105-a and the target base station 105-b, respectively, as illustrated in FIG. 3.

In some examples, the operations illustrated in process flow 500 may be performed by hardware (e.g., including circuitry, processing blocks, logic components, and other components), code (e.g., software or firmware) executed by a processor, or any combination thereof. Alternative examples of the following may be implemented, where some steps are performed in a different order than described or are not performed at all. In some cases, steps may include additional features not mentioned below, or further steps may be added.

At 505, the source relay UE 115-h may be configured to communicate with the source base station 105-e. In some aspects, the source relay UE 115-h may be configured to relay (e.g., forward) wireless communications between the source base station 105-e and the remote UE 115-f. For example, the source relay UE 115-h may be configured to relay wireless communications between the source base station 105-e and the remote UE 115-f via at least a sidelink communication link between the remote UE 115-f and the source relay UE 115-h, a Uu link between the source relay UE 115-h and the source base station 105-e, or both. In this regard, the remote UE 115-f may communicate with the source base station 105-e (e.g., exchange uplink and/or downlink signals) via at least the sidelink communication link between the remote UE 115-f and the source relay UE 115-h.

In some aspects, the handover procedures and/or reselection procedures illustrated in process flow 500 may apply to L2 relays. In this regard, aspects of the process flow 500 may implement, or be implemented by, aspects the relay scheme 205-b illustrated in FIG. 2.

At 510, the target UE 115-g may communicate with the source base station 105-e, the target base station 105-f, or both. In this regard, the target UE 115-g may be communicatively coupled to the source base station 105-e, the target base station 105-f, or both, via a Uu link with the respective base station 105.

At 515, the source relay UE 115-h may transmit one or more measurement reports to the source base station 105-e. In some aspects, the measurement reports may include measurements associated with signals (e.g., reference signals) received from the source base station 105-e, the target base station 105-f, or both. For example, the source relay UE 115-h may perform measurements (e.g., RSSI, RSRP, RSRQ, SNR, SINR, CQI) on reference signals received from the source base station 105-e and/or the target base station 105-f. In this example, the source relay UE 115-h may transmit measurement reports indicating the performed measurements. In some aspects, the source base station 105-e and/or the target base station 105-f may use information (e.g., measurements) included within the measurement reports in order to guide decisions regarding handovers at the source relay UE 115-h, the remote UE 115-f, or both.

At 5120, the source base station 105-e and/or the target base station 105-f may determine that the remote UE 115-f is to perform a handover procedure (e.g., handover decision). In particular, the source base station 105-e and/or the target base station 105-f may determine that the remote UE 115-f is to perform a handover procedure from the source relay UE 115-h to the target relay UE 115-g. In some aspects, the source base station 105-e and/or the target base station 105-f may make the handover decision based on the measurement reports received at 515.

At 525, the source base station 105-e and/or the target base station 105-f may prepare for the handover procedure for the remote UE 115-f (e.g., handover preparation). The base stations 105 may perform the handover preparation based on receiving the measurement reports at 515, making the handover decision at 520, or both. While performing the handover preparation, the source base station 105-e and/or the target base station 105-f may generate a handover command which will be transmitted to the source relay UE 115-h, the target relay UE 115-g, the remote UE 115-f, or any combination thereof. Additionally or alternatively, the source base station 105-e and/or the target base station 105-f may determine and/or generate a context for transferring the remote UE 115-f from the source UE 115-h to the target UE 115-g.

At 530, the source base station 105-e, the target base station 105-f, or both, may transmit an RRC message to the target relay UE 115-g. The source base station 105-e and/or the target base station 105-f may transmit the RRC message at 530 based on making the handover decision at 520, performing the handover preparation at 525, or both. In some aspects, the RRC message (e.g., RRCReconfiguration) may include a configuration for relaying wireless communications between the remote UE 115-f and at least one of the base stations 105.

At 535, the target relay UE 115-g may transmit an RRC message (e.g., RRCReconfigurationComplete) to the source base station 105-e, the target base station 105-f, or both. In some aspects, the target relay UE 115-g may transmit the RRC message to the source base station 105-e and/or the target base station 105-f at 535 based on (e.g., in response to) receiving the RRC message at 530. For example, the target relay UE 115-g may transmit the RRC message at 535 to the base station 105 from which the target relay UE 115-g received the RRC message at 530.

At 540, the source relay UE 115-h may receive, from the source base station 105-e, an indication for the remote UE 115-f to perform the handover procedure from the source relay UE 115-h to an additional wireless device. For example, the source base station 105-e may transmit an RRC message to the source relay UE 115-h indicating for the remote UE 115-f to perform a handover procedure from the source relay UE 115-h to the target relay UE 115-g (e.g., handover command).

In some aspects, the source relay UE 115-h may forward (e.g., relay) the indication of the handover procedure to the remote UE 115-f. Moreover, in some cases, the remote UE 115-f may be configured to release a wireless connection with the source relay UE 115-h based on (e.g., in response to) receiving the indication of the handover procedure.

In some aspects, the source base station 105-e may transmit, and the source relay UE 115-h may receive, the indication to perform the handover procedure at 535 based on transmitting/receiving the measurement reports at 515, making the handover decision at 520, performing handover preparation at 525, transmitting/receiving the RRC messages at 530 and 535, or any combination thereof. The indication to perform the handover procedure may be transmitted to the source relay UE 115-h via a handover command, which was generated during handover preparation performed at 525. In some aspects, the indication of the handover procedure may include an RRC message (e.g., RRCReconfiguration, RRCReconfiguration WithSync). Moreover, the RRC message including the indication of the handover procedure may indicate a signaling radio bearer (SRB) and/or dedicated radio bearer (DRB) for the handover procedure, an indication of a PC5 radio link control (RLC) channel configuration, or any combination thereof.

In some cases, the signaling (e.g., RRC message) used to convey the indication of the handover procedure may additionally or alternatively include identifiers associated with the remote UE 115-f, the additional wireless device, or both. For example, in cases where the remote UE 115-f receives an RRC message at 540 indicating for the remote UE 115-f to perform a handover procedure from the source relay UE 115-h to the target relay UE 115-g, the RRC message may include a first identifier associated with the remote UE 115-f, a second identifier associated with the target relay UE 115-g, or both.

At 545, the remote UE 115-f may perform the handover procedure from the source relay UE 115-h to the additional wireless device indicated at 540. For example, in cases where the remote UE 115-f is instructed to perform a handover procedure from the source relay UE 115-h to the target relay UE 115-g, the remote UE 115-f may perform the handover procedure from the source relay UE 115-h to the target relay UE 115-g. In some aspects, the remote UE 115-f may be configured to perform the handover procedure at 545 based on receiving the indication to perform the handover procedure which was transmitted by the source base station 105-e and relayed by the source relay UE 115-h at 540, releasing the wireless connection with the source relay UE 115-h, or both.

Additionally or alternatively, the remote UE 115-f may be configured to perform the handover procedure based on identifiers indicated in the RRC message including the indication of the handover procedure which was received at 540. For example, in cases where the remote UE 115-f receives an RRC message at 540 indicating for the remote UE 115-f to perform a handover procedure from the source relay UE 115-h to the target relay UE 115-g, the RRC message may include a first identifier associated with the remote UE 115-f, a second identifier associated with the target relay UE 115-g, or both. In this example, the remote UE 115-f may perform the handover procedure based on the first identifier, the second identifier, or both.

As noted previously herein, the remote UE 115-f may perform the handover procedure and/or the reselection procedure with the target relay UE 115-g (e.g., PC5 to PC5 handover/reselection), the source base station 105-e (e.g., PC5 to Uu handover/reselection), the target base station 105-f (e.g., PC5 to Uu handover/reselection), a different base station 105 (e.g., PC5 to Uu handover/reselection), or any combination thereof. In this regard, the remote UE 115-f may perform a relay handover/reselection procedure to establish a sidelink relay connection with the target relay UE 115-g and/or a cell handover/reselection procedure to establish a direct wireless connection with a base station 105 (e.g., source base station 105-e, target base station 105-f, another base station 105).

At 550, the remote UE 115-f may transmit a request to establish wireless communications with the additional wireless device indicated at 540. In some aspects, the remote UE 115-f may transmit the request at 550 based on receiving the indication of the handover procedure (e.g., RRC message) at 540, performing the handover procedure at 545, or both. For example, in cases where the remote UE 115-f is to perform the handover procedure from the source relay UE 115-h to the target relay UE 115-g, the remote UE 115-f may transmit the request to the target relay UE 115-g at 550. In this example, the target relay UE 115-g may forward (e.g., relay) the request received from the remote UE 115-f to the base station 105 with which it is communicatively coupled. For instance, in cases where the target relay UE 115-g is communicatively coupled to the target base station 105-f, the target relay UE 115-f may forward (e.g., relay) the request to the target base station 105-f. In some cases, the request may be transmitted via an RRC message (e.g., RRCReestablishmentRequest).

In additional or alternative cases, the remote UE 115-f may transmit the request at 550 to an additional wireless device other than the target relay UE 115-g. For example, in cases where the remote UE 115-f receives an RRC message at 540 indicating for the remote UE 115-f to perform a handover procedure from the source relay UE 115-h to the target base station 105-f, the remote UE 115-f may transmit the request at 550 to the target base station 105-f.

At 555, the source base station 105-e may transmit an RRC message to the source relay UE 115-h. In some aspects, the RRC message (e.g., RRCReconfiguration) may indicate a completion of the handover procedure of the remote UE 115-f from the source relay UE 115-h. In this regard, the source base station 105-e may transmit the RRC message at 555 based on transmitting the RRC message at 530, receiving the RRC message at 535, transmitting the indication of the handover procedure at 540, the remote UE 115-f performing the handover procedure at 545, the remote UE 115-f transmitting the request at 550, or any combination thereof.

At 560, the source relay UE 115-h may transmit an RRC message to the target base station 105-f. In some aspects, the RRC message (e.g., RRCReconfigurationComplete) may indicate a completion of the handover procedure of the remote UE 115-f from the source relay UE 115-h. In some cases, the source relay UE 115-h may transmit the RRC message at 560 based on (e.g., in response to) receiving the RRC message at 555.

At 670, the target relay UE 115-g may communicate with the source base station 105-e, the target base station 105-f, or both. Moreover, the remote UE 115-f may communicate with the additional wireless device associated with the handover procedure. For example, in cases where the remote UE 115-f performs the handover procedure from the source relay UE 115-h to the target relay UE 115-g, the remote UE 115-f may communicate with the target relay UE 115-g. In some aspects, the communications between the remote UE 115-f, the target relay UE 115-g, the source base station 105-e, the target base station 105-f, or any combination thereof, may be carried out based on performance of the handover procedure at 545, transmitting/receiving the request at 550, or both.

In some aspects, the target relay UE 115-g may be configured to relay (e.g., forward) wireless communications between the target base station 105-f and/or source base station 105-e and the remote UE 115-f. For example, the target relay UE 115-g may be configured to relay wireless communications between the target base station 105-f and the remote UE 115-f via at least a sidelink communication link between the remote UE 115-f and the target relay UE 115-g, a Uu link between the target relay UE 115-g and the target base station 105-f, or both. In this regard, the remote UE 115-f may communicate with the target base station 105-f (e.g., exchange uplink and/or downlink signals) via at least the sidelink communication link between the remote UE 115-f and the target relay UE 115-h.

In some aspects, the techniques described in process flow 500 may improve wireless communications at the remote UE 115-f when performing a handover procedure from the source relay UE 115-h to an additional wireless device (e.g., target relay UE 115-g). In particular, the aspects of process flow 500 may enable improved service continuity at the remote UE 115-f throughout the handover procedure.

Techniques described herein may enable improved handover procedures for both remote UEs 115 and relay UEs 115 in the context of wireless communications systems which do not support group mobility. In particular, techniques described herein may support improved handover procedures which may reduce, or eliminate, interruptions of data transfer at the remote UE 115-f which are attributable to a handover procedure at the source relay UE 115-h. By reducing interruptions of data transfer at the remote UE 115-f which are attributable to handover procedures, techniques described herein may enable improved service continuity, decrease power consumption attributable to handover procedures, and improve user experience.

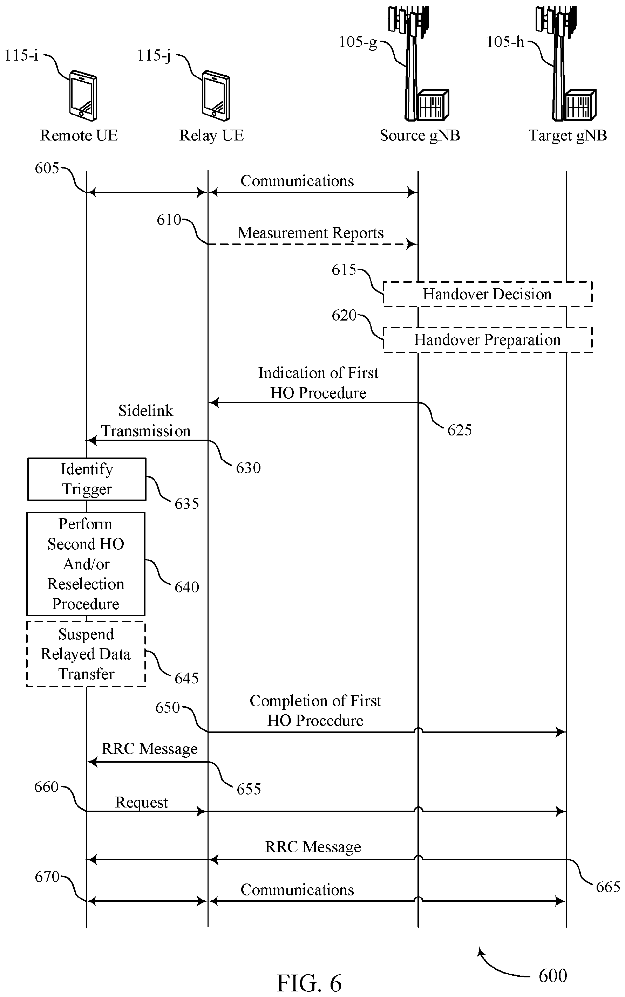

**FIG. 6** illustrates an example of a process flow 600 that supports techniques for remote UE handover due to relay UE mobility in accordance with aspects of the present disclosure. In some examples, process flow 600 may implement, or be implemented by, aspects of wireless communications systems 100, relay configuration 200, wireless communications system 300, process flow 400, process flow 500, or any combination thereof. For example, the process flow 600 may illustrate a remote UE 115-i performing a handover and/or reselection procedure due to the mobility of a relay UE 115-j, as described with reference to FIGs. 1-3.

In some cases, process flow 600 may include a remote UE 115-i, a relay UE 115-j, a source base station 105-g, and a target base station 105-h, which may be examples of corresponding devices as described herein. For example, in some cases, the remote UE 115-i and the relay UE 115-j illustrated in FIG. 6 may be examples of the remote UE 115-b and the relay UE 115-a, respectively, as illustrated in FIG. 3. Similarly, the source base station 105-g and the target base station 105-h illustrated in FIG. 6 may be examples of the source base station 105-a and the target base station 105-b, respectively, as illustrated in FIG. 3.

In some examples, the operations illustrated in process flow 600 may be performed by hardware (e.g., including circuitry, processing blocks, logic components, and other components), code (e.g., software or firmware) executed by a processor, or any combination thereof. Alternative examples of the following may be implemented, where some steps are performed in a different order than described or are not performed at all. In some cases, steps may include additional features not mentioned below, or further steps may be added.

At 605, the relay UE 115-j may be configured to communicate with the source base station 105-g. In some aspects, the relay UE 115-j may be configured to relay (e.g., forward) wireless communications between the source base station 105-g and the remote UE 115-i. For example, the relay UE 115-j may be configured to relay wireless communications between the source base station 105-g and the remote UE 115-i via at least a sidelink communication link between the remote UE 115-i and the relay UE 115-j, a Uu link between the relay UE 115-j and the source base station 105-g, or both. In this regard, the remote UE 115-i may communicate with the source base station 105-g (e.g., exchange uplink and/or downlink signals) via at least the sidelink communication link between the remote UE 115-i and the relay UE 115-j.

In some aspects, the handover procedures and/or reselection procedures illustrated in process flow 600 may apply to L2 relays. In this regard, aspects of the process flow 600 may implement, or be implemented by, aspects the relay scheme 205-b illustrated in FIG. 2.

At 610, the relay UE 115-j may transmit one or more measurement reports to the source base station 105-g. In some aspects, the measurement reports may include measurements associated with signals (e.g., reference signals) received from the source base station 105-g, the target base station 105-h, or both. For example, the relay UE 115-j may perform measurements (e.g., RSSI, RSRP, RSRQ, SNR, SINR, CQI) on reference signals received from the source base station 105-g and/or the target base station 105-h. In this example, the relay UE 115-j may transmit measurement reports indicating the performed measurements. In some aspects, the source base station 105-g and/or the target base station 105-h may use information (e.g., measurements) included within the measurement reports in order to guide decisions regarding handovers at the relay UE 115-j.

At 615, the source base station 105-g and/or the target base station 105-g may determine that the relay UE 115-c is to perform a first handover procedure (e.g., handover decision). In some aspects, the source base station 105-g and/or the target base station 105-g may make the handover decision based on the measurement reports received at 610. For example, the measurement reports may indicate a higher signal strength or signal quality associated with wireless communications carried out with the target base station 105-h as compared to the source base station 105-g. In such cases, the base stations 105 may determine that the relay UE 115-j is to perform a first handover procedure from the source base station 105-g to the target base station 105-h.

At 620, the source base station 105-g and/or the target base station 105-h may prepare for the first handover procedure at the relay UE 115-j (e.g., handover preparation). The base stations 105 may perform the handover preparation based on receiving the measurement reports at 410, making the handover decision at 415, or both. While performing the handover preparation, the source base station 105-g and/or the target base station 105-h may generate a handover command which will be transmitted to the relay UE 115-j. Additionally or alternatively, the source base station 105-g and/or the target base station 105-h may determine and/or generate a context for transferring the remote UE 115-i and/or the relay UE 115-j from the source base station 105-g to the target base station 105-h.

At 625, the relay UE 115-j may receive, from the source base station 105-g, an indication for the relay UE 115-j to perform the first handover procedure from the source base station 105-g to the target base station 105-h (e.g., handover command). In some aspects, the source base station 105-g may transmit, and the relay UE 115-j may receive, the indication to perform the first handover procedure at 625 based on transmitting/receiving the measurement reports at 610, making the handover decision at 615, performing handover preparation at 620, or any combination thereof. The indication to perform the first handover procedure may be transmitted to the relay UE 115-j via a handover command, which was generated during handover preparation performed at 620. In some aspects, the indication for the relay UE 115-j to perform the first handover procedure may be communicated via an RRC message (e.g., RRCReconfiguration, RRCReconfiguration WithSync).

At 630, the relay UE 115-c may transmit a sidelink transmission including a trigger for the remote UE 115-i to perform a second handover procedure, a reselection procedure, or both. The relay UE 115-c may transmit the sidelink transmission including the trigger via the sidelink communication link between the relay UE 115-j and the remote UE 115-i. In some aspects, the relay UE 115-j may transmit the sidelink transmission including the trigger based on receiving the indication for the relay UE 115-j to perform the first handover procedure at 625.

In some aspects, the sidelink transmission including the trigger for the remote UE 115-i to perform the second handover procedure and/or the reselection procedure may include an RRC message (e.g., PC5 RRC message). In some cases, the sidelink transmission (e.g., RRC message) at 630 may additionally or alternatively indicate a mobility status of the relay UE 115-j and/or identifiers associated with the target base station 105-h. A mobility status may include a status of the first handover procedure to be performed at the relay UE 115-j (e.g., handover start, handover success/complete, handover failure). For example, in some cases, the relay UE 115-j may transmit, to the remote UE 115-i via the sidelink transmission (e.g., RRC message), an indication of a start of the first handover procedure, an identifier associated with the target base station 105-h, or both. The remote UE 115-i may be configured to utilize information included within the sidelink transmission (e.g., mobility status of the relay UE 115-j, identifier of the target base station 105-h) to perform the second handover procedure and/or reselection procedure.

At 635, the remote UE 115-i may identify the trigger for the remote UE 115-i to perform the second handover procedure and/or reselection procedure. In some aspects, the trigger for the remote UE 115-i to perform the second handover procedure and/or reselection procedure may be based on the first handover procedure at the relay UE 115-j. The second handover procedure and/or the reselection procedure may include a handover procedure and/or reselection procedure from the relay UE 115-c to the same relay UE 115-j, another relay UE 115 (e.g., relay handover/reselection procedure), the first and/or second base stations 105-g and 105-h (e.g., cell handover/reselection procedure), or any combination thereof. In some aspects, the remote UE 115- may identify the trigger for the remote UE 115-i to perform the second handover procedure and/or reselection procedure based on receiving the sidelink transmission including the trigger at 630.

At 635, the remote UE 115-i may perform the second handover procedure, the reselection procedure, or both (e.g., relay handover/reselection procedure, cell handover/reselection procedure). In some aspects, the remote UE 115-i may perform the second handover procedure and/or the reselection procedure based on receiving the sidelink transmission indicating the trigger at 630, identifying the trigger at 635, or both.

As noted previously herein, the remote UE 115-i may perform the second handover procedure and/or the reselection procedure with the same relay UE 115-j (e.g., PC5 to PC5 handover/reselection), a different relay UE 115 (e.g., PC5 to PC5 handover/reselection), the source base station 105-g (e.g., PC5 to Uu handover/reselection), the target base station 105-h (e.g., PC5 to Uu handover/reselection), a different base station 105 (e.g., PC5 to Uu handover/reselection), or any combination thereof. In this regard, the remote UE 115-i may perform a relay handover/reselection procedure to establish a sidelink relay connection with a relay UE 115 (e.g., relay UE 115-j or another relay UE 115-) and/or a cell handover/reselection procedure to establish a direct wireless connection with a base station 105 (e.g., source base station 105-g, target base station 105-h, another base station 105).

For example, in some cases, the remote UE 115-i may perform the second handover procedure and/or reselection procedure with the relay UE 115-j to re-establish wireless communications with the relay UE 115-j. In this example, the remote UE 115-i and the relay UE 115-j may perform the second handover procedure and/or the reselection procedure based on the relay UE 115-j performing the first handover procedure, based on the remote UE 115-i and/or the relay UE 115-j identifying an interruption in data transfer between the UEs 115, or both.

In additional or alternative implementations, the remote UE 115-i may perform the second handover procedure and/or the reselection procedure with a wireless communications device other than the relay UE 115-j. For example, in some cases, the remote UE 115-i may perform the second handover procedure and/or the reselection procedure with an additional relay UE 115 (e.g., PC5 to PC5 handover or reselection). In this example, the remote UE 115-i may perform the second handover procedure and/or reselection procedure with the additional relay UE 115 in order to communicate with the source base station 105-g, the target base station 105-h, or another base station 105 via the additional relay UE 115. By way of another example, the remote UE 115-i may perform the second handover procedure and/or the reselection procedure with the source base station 105-g, the target base station 105-h, and/or an additional base station 105 (e.g., PC5 to Uu handover or reselection). In such cases, the remote UE 115-i may perform the second handover procedure and/or reselection procedure with the respective base station 105 in order to establish wireless communications (e.g., direct uplink and downlink communications) with the respective base station 105.

In some aspects, the remote UE 115-i may perform the second handover procedure and/or the reselection procedure based on receiving the indication of the mobility status of the relay UE 115-j and/or the identifier associated with the target base station 105-h. In some cases, the remote UE 115-i may prioritize the relay UE 115-j and/or the target base station 105-h in the second handover procedure and/or reselection procedure based on receiving the indication of the mobility status of the relay UE 115-j and/or the identifier associated with the target base station 105-h. In other words, the remote UE 115-i may attempt to perform the second handover procedure and/or reselection procedure with the relay UE 115-j and/or the target base station 105-h before attempting to perform the second handover procedure and/or reselection procedure with other relay UEs 115 or other base stations 105.

In cases where the remote UE 115-i selects to perform the second handover procedure and/or reselection procedure with the same relay UE 115-j, the process flow 600 may proceed to 645.

At 645, the remote UE 115-i may suspend wireless communications with the relay UE 115-j without releasing a wireless connection with the relay UE 115-j. In particular, the remote UE 115-i may be configured to suspend relayed data transfer with the relay UE 115-j (as opposed to releasing the PC5 link with the relay UE 115-j) based on determining to perform the second handover procedure and/or reselection procedure with the relay UE 115-j at 635. Comparatively, in cases where the remote UE 115-i determines to perform the second handover procedure and/or reselection procedure with a different relay UE 115 and/or a base station 105, the remote UE 115-i may instead release a wireless connection (e.g., PC5 connection) with the relay UE 115-j (as opposed to suspending relayed data transfer).

At 650, the relay UE 115-j may transmit an uplink message to the target base station 105-h indicating a completion of the first handover procedure. In some aspects, the indication of the completion of the first handover procedure may be transmitted via a control message (e.g., RRC message, RRCReconfigurationComplete).

In cases where the relay UE 115-j performs the second handover procedure and/or the reselection procedure with the remote UE 115-i at 640, the relay UE 115-j may additionally transmit an indication of a completion of the second handover procedure. For example, the relay UE 115-j may indicate, to the target base station 105-h, that the relay UE 115-i has completed the first handover procedure with the target base station 105-h, the second handover procedure with the remote UE 115-i, the reselection procedure with the remote UE 115-i, or any combination thereof, via one or more control messages.

At 655, the relay UE 115-j may transmit a sidelink transmission (e.g., RRC message) to the remote UE 115-i. In some aspects, the relay UE 115-j may transmit, and the remote UE 115-i may receive, the RRC message at 655 based on identifying an interruption of data transfer between the remote UE 115-i and the relay UE 115-j. In some aspects, the RRC message may include an indication of a completion of the first handover procedure (e.g., handover success), an indication of an identifier associated with the target base station 105-h, or both. In this regard, the relay UE 115-j may transmit the RRC message to the remote UE 115-i at 655 based on transmitting the indication of the completion of the first handover procedure to the target base station 105-h at 650.

In additional or alternative cases, the RRC message transmitted/received at 655 may indicate a failure of the first handover procedure (e.g., handover failure). In such cases, the remote UE 115-i may be configured to release the wireless connection with the relay UE 115-j and perform the second handover procedure and/or reselection procedure (e.g., cell selection/reselection, relay selection/reselection) in order to establish wireless communications with the relay UE 115-j, an additional relay UE 115, the source base station 105-g, the target base station 105-h, an additional base station 105, or any combination thereof.

At 660, the remote UE 115-i may transmit, to the relay UE 115-j, a request to reestablish wireless communications between the remote UE 115-i and the relay UE 115-j. In some aspects, the remote UE 115-i may transmit the request at 660 based on receiving the RRC message indicating the success of the first handover procedure at 655. In some aspects, the relay UE 115-j may forward (e.g., relay) the request received from the remote UE 115-i to the target base station 105-h. In some cases, the request may be transmitted via an RRC message (e.g., RRCReestablishmentRequest).

In some aspects, the remote UE 115-i may transmit the request reestablish wireless communications between the remote UE 115-i and the relay UE 115-j based on identifying a priority associated with the relay UE 115-j. For example, as noted previously herein, the remote UE 115-i may be configured to prioritize the relay UE 115-j for the second handover procedure and/or reselection procedure. In this regard, the remote UE 115-i may determine a first priority associated with the relay UE 115-j, and an additional priority associated with an additional wireless device (e.g., additional relay UE 115, source base station 105-g, target base station 105-h, additional base station 105), where the first priority is greater than the second priority. In this example, the remote UE 115-i may transmit the request based on a relative ranking of the first priority and the second priority.

At 665, the target base station 105-h may transmit an RRC message indicating a completion of the second handover procedure and/or reselection procedure. In some cases, target base station 105-h may transmit the RRC message (e.g., RRCReestablishmentComplete) to the relay UE 115-j, which is configured to forward (e.g., relay) the RRC message to the remote UE 115-i. In some aspects, the target base station 105-h may be configured to transmit the RRC message at 665 based on receiving the request from the remote UE 115-i and/or relay UE 115-j at 660.

At 670, the relay UE 115-j may communicate with the target base station 105-h. Moreover, the remote UE 115-i may communicate with the relay UE 115-i, the target base station 105-h, or both. In some aspects, the communications between the remote UE 115-i, the relay UE 115-j, the target base station 105-h, or any combination thereof, may be carried out based on performance of the first handover procedure, transmitting/receiving the sidelink transmission at 630, identifying the trigger at 635, performing the second handover procedure and/or reselection procedure at 640, suspending wireless communications at 645, transmitting/receiving the indication of the first handover procedure at 650, transmitting/receiving the RRC message at 655, transmitting/receiving the request at 660, transmitting/receiving the RRC message at 665, or any combination thereof.

In some aspects, the relay UE 115-j may be configured to relay (e.g., forward) wireless communications between the target base station 105-h and the remote UE 115-i. For example, the relay UE 115-j may be configured to relay wireless communications between the target base station 105-h and the remote UE 115-i via at least a sidelink communication link between the remote UE 115-i and the relay UE 115-j, a Uu link between the relay UE 115-j and the target base station 105-h, or both. In this regard, the remote UE 115-i may communicate with the target base station 105-h (e.g., exchange uplink and/or downlink signals) via at least the sidelink communication link between the remote UE 115-i and the relay UE 115-j.

Techniques described herein may enable improved handover procedures for both remote UEs 115 and relay UEs 115 in the context of wireless communications systems which do not support group mobility. In particular, techniques described herein may support improved handover procedures which may reduce, or eliminate, interruptions of data transfer at the remote UE 115-i which are attributable to a handover procedure at the relay UE 115-j. By reducing interruptions of data transfer at the remote UE 115-i which are attributable to handover procedures, techniques described herein may enable improved service continuity, decrease power consumption attributable to handover procedures, and improve user experience.

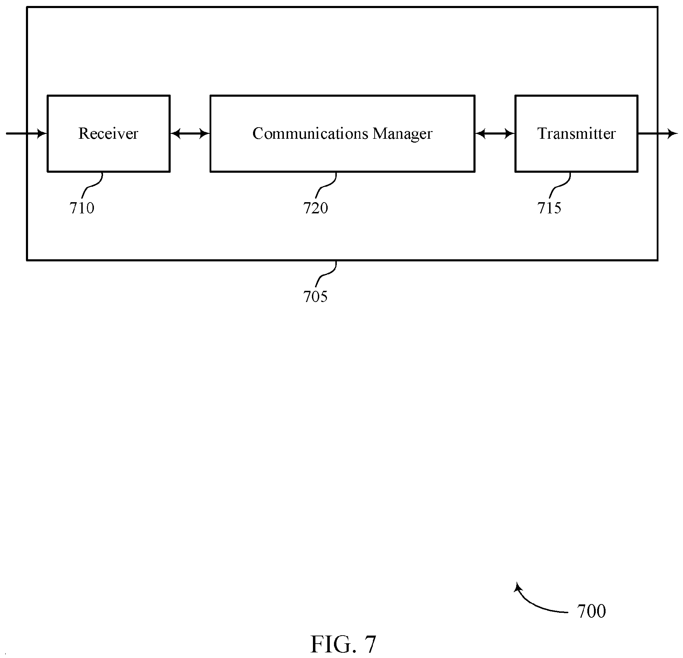

**FIG. 7** shows a block diagram 700 of a device 705 that supports techniques for remote UE handover due to relay UE mobility in accordance with aspects of the present disclosure. The device 705 may be an example of aspects of a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to techniques for remote UE handover due to relay UE mobility). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to techniques for remote UE handover due to relay UE mobility). In some examples, the transmitter 715 may be co-located with a receiver 710 in a transceiver module. The transmitter 715 may utilize a single antenna or a set of multiple antennas.

The communications manager 720, the receiver 710, the transmitter 715, or various combinations thereof or various components thereof may be examples of means for performing various aspects of techniques for remote UE handover due to relay UE mobility as described herein. For example, the communications manager 720, the receiver 710, the transmitter 715, or various combinations or components thereof may support a method for performing one or more of the functions described herein.

In some examples, the communications manager 720, the receiver 710, the transmitter 715, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 720, the receiver 710, the transmitter 715, or various combinations or components thereof may be implemented in code (e.g., as communications management software or firmware) executed by a processor. If implemented in code executed by a processor, the functions of the communications manager 720, the receiver 710, the transmitter 715, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 720 may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communication at a first UE in accordance with examples as disclosed herein. For example, the communications manager 720 may be configured as or otherwise support a means for communicating with a first base station, where the first UE is configured to relay wireless communications between a second UE and the first base station via at least a sidelink communication link between the first UE and the second UE. The communications manager 720 may be configured as or otherwise support a means for receiving, from the first base station, an indication for the first UE to perform a first handover procedure from the first base station to a second base station. The communications manager 720 may be configured as or otherwise support a means for transmitting, to the second UE via the sidelink communication link and based on receiving the indication to perform the first handover procedure, a sidelink transmission including a trigger for the second UE to perform a second handover procedure or a reselection procedure. The communications manager 720 may be configured as or otherwise support a means for communicating with the second base station based on performing the first handover procedure from the first base station to the second base station.

Additionally, or alternatively, the communications manager 720 may support wireless communication at a second UE in accordance with examples as disclosed herein. For example, the communications manager 720 may be configured as or otherwise support a means for communicating with a first base station via a first UE, where the first UE is configured to relay wireless communications between the second UE and the first base station via at least a sidelink communication link between the first UE and the second UE. The communications manager 720 may be configured as or otherwise support a means for identifying a trigger for the second UE to perform a second handover procedure or a reselection procedure, where the trigger is based on a first handover procedure of the first UE from the first base station to a second base station. The communications manager 720 may be configured as or otherwise support a means for performing at least one of the second handover procedure or the reselection procedure based on identifying the trigger.

Additionally, or alternatively, the communications manager 720 may support wireless communication at a second UE in accordance with examples as disclosed herein. For example, the communications manager 720 may be configured as or otherwise support a means for communicating with a first base station via a first UE, where the first UE is configured to relay wireless communications between the second UE and the first base station via at least a sidelink communication link between the first UE and the second UE. The communications manager 720 may be configured as or otherwise support a means for receiving, from the first UE, a radio resource control message including an indication for the second UE to perform a handover procedure from the first UE to an additional wireless device. The communications manager 720 may be configured as or otherwise support a means for performing the handover procedure from the first UE to the additional wireless device based on receiving the radio resource control message.

By including or configuring the communications manager 720 in accordance with examples as described herein, the device 705 (e.g., a processor controlling or otherwise coupled to the receiver 710, the transmitter 715, the communications manager 720, or a combination thereof) may support techniques for improved handover procedures for both remote UEs 115 and relay UEs 115 in the context of wireless communications systems which do not support group mobility. In particular, techniques described herein may support improved handover procedures which may reduce, or eliminate, interruptions of data transfer at a remote UE 115 which are attributable to handover procedures of a relay UE 115 or the remote UE 115. By reducing interruptions of data transfer at the remote UE 115 which are attributable to handover procedures, techniques described herein may enable improved service continuity, decrease power consumption attributable to handover procedures, and improve user experience.

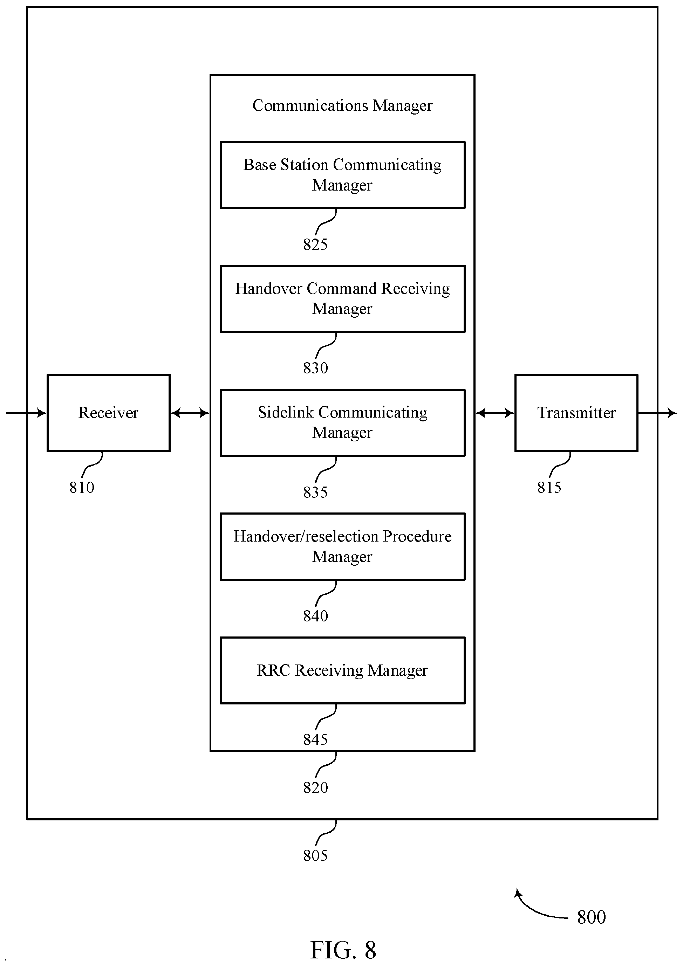

**FIG.** 8 shows a block diagram 800 of a device 805 that supports techniques for remote UE handover due to relay UE mobility in accordance with aspects of the present disclosure. The device 805 may be an example of aspects of a device 705 or a UE 115 as described herein. The device 805 may include a receiver 810, a transmitter 815, and a communications manager 820. The device 805 may also include a processor. Each of these components may be in communication with one another (e.g., via one or more buses).

The receiver 810 may provide a means for receiving information such as packets, user data, control information, or any combination thereof associated with various information channels (e.g., control channels, data channels, information channels related to techniques for remote UE handover due to relay UE mobility). Information may be passed on to other components of the device 805. The receiver 810 may utilize a single antenna or a set of multiple antennas.

The transmitter 815 may provide a means for transmitting signals generated by other components of the device 805. For example, the transmitter 815 may transmit information such as packets, user data, control information, or any combination thereof associated with various information channels (e.g., control channels, data channels, information channels related to techniques for remote UE handover due to relay UE mobility). In some examples, the transmitter 815 may be co-located with a receiver 810 in a transceiver module. The transmitter 815 may utilize a single antenna or a set of multiple antennas.

The device 805, or various components thereof, may be an example of means for performing various aspects of techniques for remote UE handover due to relay UE mobility as described herein. For example, the communications manager 820 may include a base station communicating manager 825, a handover command receiving manager 830, a sidelink communicating manager 835, a handover/reselection procedure manager 840, an RRC receiving manager 845, or any combination thereof. The communications manager 820 may be an example of aspects of a communications manager 720 as described herein. In some examples, the communications manager 820, or various components thereof, may be configured to perform various operations (e.g., receiving, monitoring, transmitting) using or otherwise in cooperation with the receiver 810, the transmitter 815, or both. For example, the communications manager 820 may receive information from the receiver 810, send information to the transmitter 815, or be integrated in combination with the receiver 810, the transmitter 815, or both to receive information, transmit information, or perform various other operations as described herein.

The communications manager 820 may support wireless communication at a first UE in accordance with examples as disclosed herein. The base station communicating manager 825 may be configured as or otherwise support a means for communicating with a first base station, where the first UE is configured to relay wireless communications between a second UE and the first base station via at least a sidelink communication link between the first UE and the second UE. The handover command receiving manager 830 may be configured as or otherwise support a means for receiving, from the first base station, an indication for the first UE to perform a first handover procedure from the first base station to a second base station. The sidelink communicating manager 835 may be configured as or otherwise support a means for transmitting, to the second UE via the sidelink communication link and based on receiving the indication to perform the first handover procedure, a sidelink transmission including a trigger for the second UE to perform a second handover procedure or a reselection procedure. The base station communicating manager 825 may be configured as or otherwise support a means for communicating with the second base station based on performing the first handover procedure from the first base station to the second base station.

Additionally, or alternatively, the communications manager 820 may support wireless communication at a second UE in accordance with examples as disclosed herein. The base station communicating manager 825 may be configured as or otherwise support a means for communicating with a first base station via a first UE, where the first UE is configured to relay wireless communications between the second UE and the first base station via at least a sidelink communication link between the first UE and the second UE. The handover/reselection procedure manager 840 may be configured as or otherwise support a means for identifying a trigger for the second UE to perform a second handover procedure or a reselection procedure, where the trigger is based on a first handover procedure of the first UE from the first base station to a second base station. The handover/reselection procedure manager 840 may be configured as or otherwise support a means for performing at least one of the second handover procedure or the reselection procedure based on identifying the trigger.

Additionally, or alternatively, the communications manager 820 may support wireless communication at a second UE in accordance with examples as disclosed herein. The sidelink communicating manager 835 may be configured as or otherwise support a means for communicating with a first base station via a first UE, where the first UE is configured to relay wireless communications between the second UE and the first base station via at least a sidelink communication link between the first UE and the second UE. The RRC receiving manager 845 may be configured as or otherwise support a means for receiving, from the first UE, a radio resource control message including an indication for the second UE to perform a handover procedure from the first UE to an additional wireless device. The handover/reselection procedure manager 840 may be configured as or otherwise support a means for performing the handover procedure from the first UE to the additional wireless device based on receiving the radio resource control message.

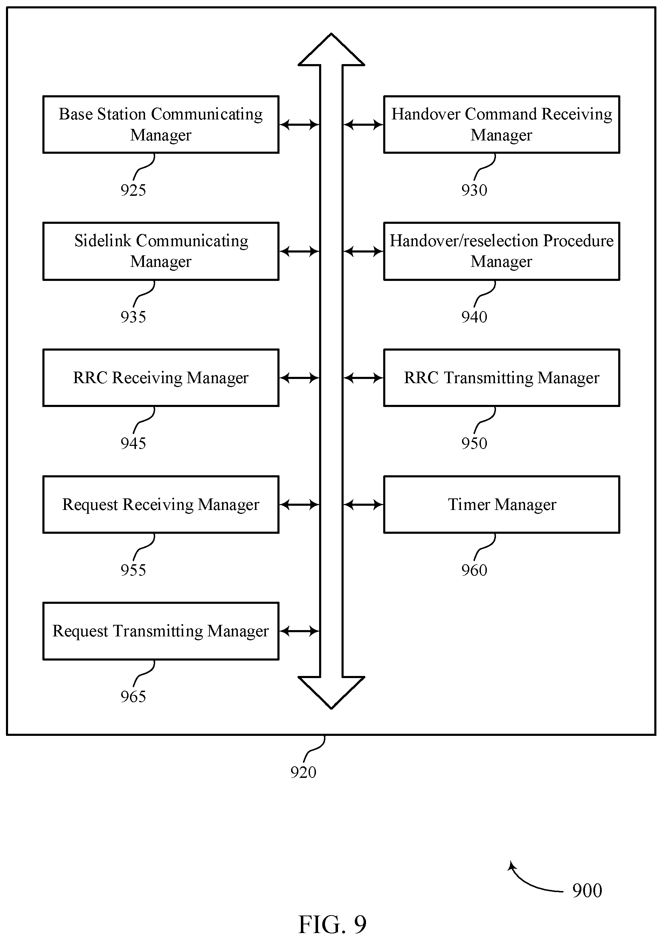

**FIG. 9** shows a block diagram 900 of a communications manager 920 that supports techniques for remote UE handover due to relay UE mobility in accordance with aspects of the present disclosure. The communications manager 920 may be an example of aspects of a communications manager 720, a communications manager 820, or both, as described herein. The communications manager 920, or various components thereof, may be an example of means for performing various aspects of techniques for remote UE handover due to relay UE mobility as described herein. For example, the communications manager 920 may include a base station communicating manager 925, a handover command receiving manager 930, a sidelink communicating manager 935, a handover/reselection procedure manager 940, an RRC receiving manager 945, an RRC transmitting manager 950, a request receiving manager 955, a timer manager 960, a request transmitting manager 965, or any combination thereof. Each of these components may communicate, directly or indirectly, with one another (e.g., via one or more buses).

The communications manager 920 may support wireless communication at a first UE in accordance with examples as disclosed herein. The base station communicating manager 925 may be configured as or otherwise support a means for communicating with a first base station, where the first UE is configured to relay wireless communications between a second UE and the first base station via at least a sidelink communication link between the first UE and the second UE. The handover command receiving manager 930 may be configured as or otherwise support a means for receiving, from the first base station, an indication for the first UE to perform a first handover procedure from the first base station to a second base station. The sidelink communicating manager 935 may be configured as or otherwise support a means for transmitting, to the second UE via the sidelink communication link and based on receiving the indication to perform the first handover procedure, a sidelink transmission including a trigger for the second UE to perform a second handover procedure or a reselection procedure. In some examples, the base station communicating manager 925 may be configured as or otherwise support a means for communicating with the second base station based on performing the first handover procedure from the first base station to the second base station.

In some examples, the handover/reselection procedure manager 940 may be configured as or otherwise support a means for performing the second handover procedure or the reselection procedure with the second UE based on the first handover procedure and identifying an interruption in data transfer between the first UE and the second UE. In some examples, the sidelink communicating manager 935 may be configured as or otherwise support a means for communicating with the second UE via the sidelink communication link based on performing the second handover procedure or the reselection procedure.

In some examples, the RRC transmitting manager 950 may be configured as or otherwise support a means for transmitting, to the second base station, a radio resource control message indicating a completion of the first handover procedure, where communicating with the second base station is based on transmitting the radio resource control message.

In some examples, the sidelink communicating manager 935 may be configured as or otherwise support a means for transmitting, to the second UE via the sidelink transmission, a sidelink release message (e.g., L2 release message) indicating for the second UE to release a wireless connection between the first UE and the second UE. In some examples, the sidelink communicating manager 935 may be configured as or otherwise support a means for transmitting, to the second UE via the sidelink transmission, a sidelink modification message indicating for the second UE to reconfigure a wireless connection between the first UE and the second UE.

In some examples, the sidelink transmission includes a radio resource control message, and the RRC transmitting manager 950 may be configured as or otherwise support a means for transmitting, to the second UE via the radio resource control message, an indication of the first handover procedure, an identifier associated with the second base station, or both, where the indication to perform the second handover procedure, the reselection procedure, or both, is based on the indication of the first handover procedure, the identifier associated with the second base station, or both.

In some examples, the RRC transmitting manager 950 may be configured as or otherwise support a means for transmitting, to the second UE based on identifying an interruption of data transfer between the first UE and the second UE, a radio resource control message including an indication of a completion of the first handover procedure, an indication of an identifier associated with the second base station, or both. In some examples, the request receiving manager 955 may be configured as or otherwise support a means for receiving, from the second UE, a request to reestablish wireless communications between the first UE and the second UE based on the radio resource control message. In some examples, the sidelink communicating manager 935 may be configured as or otherwise support a means for communicating with the second UE via the sidelink communication link based on receiving the request.

In some examples, the base station communicating manager 925 may be configured as or otherwise support a means for relaying the request from the second UE to the second base station based on receiving the request. In some examples, the sidelink communicating manager 935 may be configured as or otherwise support a means for relaying wireless communications between the second UE and the second base station via at least the sidelink communication link between the first UE and the second base station based on relaying the request.

Additionally, or alternatively, the communications manager 920 may support wireless communication at a second UE in accordance with examples as disclosed herein. In some examples, the base station communicating manager 925 may be configured as or otherwise support a means for communicating with a first base station via a first UE, where the first UE is configured to relay wireless communications between the second UE and the first base station via at least a sidelink communication link between the first UE and the second UE. The handover/reselection procedure manager 940 may be configured as or otherwise support a means for identifying a trigger for the second UE to perform a second handover procedure or a reselection procedure, where the trigger is based on a first handover procedure of the first UE from the first base station to a second base station. In some examples, the handover/reselection procedure manager 940 may be configured as or otherwise support a means for performing at least one of the second handover procedure or the reselection procedure based on identifying the trigger.

In some examples, the handover/reselection procedure manager 940 may be configured as or otherwise support a means for performing the second handover procedure or the reselection procedure with the second UE based on the first handover procedure and identifying an interruption in data transfer between the first UE and the second UE. In some examples, the sidelink communicating manager 935 may be configured as or otherwise support a means for communicating with the first UE via the sidelink communication link based on performing the second handover procedure or the reselection procedure.

In some examples, the request receiving manager 955 may be configured as or otherwise support a means for receiving, from the first UE, a sidelink release message (e.g., L2 release message). indicating for the second UE to release a wireless connection between the first UE and the second UE. In some examples, the request receiving manager 955 may be configured as or otherwise support a means for transmitting, to the second UE, a sidelink modification message indicating for the second UE to reconfigure a wireless connection between the first UE and the second UE. In some examples, the sidelink communicating manager 935 may be configured as or otherwise support a means for releasing the wireless connection between the first UE and the second UE based on receiving the release message, where performing the second handover procedure or the reselection procedure is based on releasing the wireless connection.

In some examples, the timer manager 960 may be configured as or otherwise support a means for initiating a timer based on the first handover procedure and identifying an interruption of data transfer between the first UE and the second UE. In some examples, the timer manager 960 may be configured as or otherwise support a means for identifying an expiration of the timer based on initiating the timer. In some examples, the sidelink communicating manager 935 may be configured as or otherwise support a means for releasing a wireless connection between the first UE and the second UE based on identifying the expiration of the timer, where performing the second handover procedure or the reselection procedure is based on releasing the wireless connection.

In some examples, the sidelink communicating manager 935 may be configured as or otherwise support a means for communicating with the first UE, the first base station, the second base station, an additional UE, an additional base station, or any combination thereof, based on performing the second handover procedure, the reselection procedure, or both.

In some examples, the RRC receiving manager 945 may be configured as or otherwise support a means for receiving, from the first UE, a radio resource control message including an indication of the first handover procedure, an identifier associated with the second base station, or both, where the indication to perform the second handover procedure, the reselection procedure, or both, is based on the indication of the first handover procedure, the identifier associated with the second base station, or both.

In some examples, the RRC receiving manager 945 may be configured as or otherwise support a means for receiving, from the second UE based on identifying an interruption of data transfer between the first UE and the second UE, a radio resource control message including an indication of a completion of the first handover procedure, an indication of an identifier associated with the second base station, or both. In some examples, the request transmitting manager 965 may be configured as or otherwise support a means for transmitting, to the first UE, a request to reestablish wireless communications between the first UE and the second UE based on the radio resource control message. In some examples, the sidelink communicating manager 935 may be configured as or otherwise support a means for communicating with the first UE via the sidelink communication link based on receiving the request.

In some examples, the sidelink communicating manager 935 may be configured as or otherwise support a means for suspending wireless communications between the first UE and the second UE without releasing a wireless connection between the first UE and the second UE based on receiving the radio resource control message, where receiving the radio resource control message is based on suspending the wireless communications.

In some examples, the sidelink communicating manager 935 may be configured as or otherwise support a means for communicating with the second base station via the first UE based on communicating with the first UE, where the first UE is configured to relay wireless communications between the second UE and the second base station via at least the sidelink communication link between the first UE and the second UE.

In some examples, the second UE transmits the request based on identifying a priority associated with the first UE.

In some examples, the RRC receiving manager 945 may be configured as or otherwise support a means for receiving, from the first UE based on identifying an interruption of data transfer between the first UE and the second UE, a radio resource control message including an indication of a failure of the first handover procedure. In some examples, the sidelink communicating manager 935 may be configured as or otherwise support a means for releasing a wireless connection between the first UE and the second UE based on receiving the indication of the failure of the first handover procedure, where performing the second handover procedure or the reselection procedure is based on releasing the wireless connection.

Additionally, or alternatively, the communications manager 920 may support wireless communication at a second UE in accordance with examples as disclosed herein. In some examples, the sidelink communicating manager 935 may be configured as or otherwise support a means for communicating with a first base station via a first UE, where the first UE is configured to relay wireless communications between the second UE and the first base station via at least a sidelink communication link between the first UE and the second UE. The RRC receiving manager 945 may be configured as or otherwise support a means for receiving, from the first UE, a radio resource control message including an indication for the second UE to perform a handover procedure from the first UE to an additional wireless device. In some examples, the handover/reselection procedure manager 940 may be configured as or otherwise support a means for performing the handover procedure from the first UE to the additional wireless device based on receiving the radio resource control message.

In some examples, the additional wireless device includes a third UE, and the request transmitting manager 965 may be configured as or otherwise support a means for transmitting, to the third UE based on receiving the radio resource control message, a request to establish wireless communications with the third UE. In some examples, the additional wireless device includes a third UE, and the sidelink communicating manager 935 may be configured as or otherwise support a means for communicating with the third UE via an additional sidelink communication link between the second UE and the third UE based on transmitting the request.

In some examples, the sidelink communicating manager 935 may be configured as or otherwise support a means for communicating with the first base station, a second base station, or both, via the third UE based on communicating with the third UE, where the third UE is configured to relay wireless communications between the second UE and the first base station, the second base station, or both, via at least the additional sidelink communication link between the second UE and the third UE.

In some examples, the additional wireless device includes the first base station, and the request transmitting manager 965 may be configured as or otherwise support a means for transmitting, based on receiving the radio resource control message, a request to establish wireless communications with the first base station, the second base station, or both. In some examples, the additional wireless device includes the first base station, and the base station communicating manager 925 may be configured as or otherwise support a means for communicating with the first base station, the second base station, or both, via one or more Uu communication links based on transmitting the request.

In some examples, the sidelink communicating manager 935 may be configured as or otherwise support a means for releasing a wireless connection between the second UE and the first UE based on receiving the radio resource control message, where performing the handover procedure is based on releasing the wireless connection.

In some examples, the radio resource control message includes a first identifier associated with the second UE, a second identifier associated with the additional wireless device, or both. In some examples, performing the handover procedure from the first UE to the additional wireless device is based on the first identifier, the second identifier, or both.

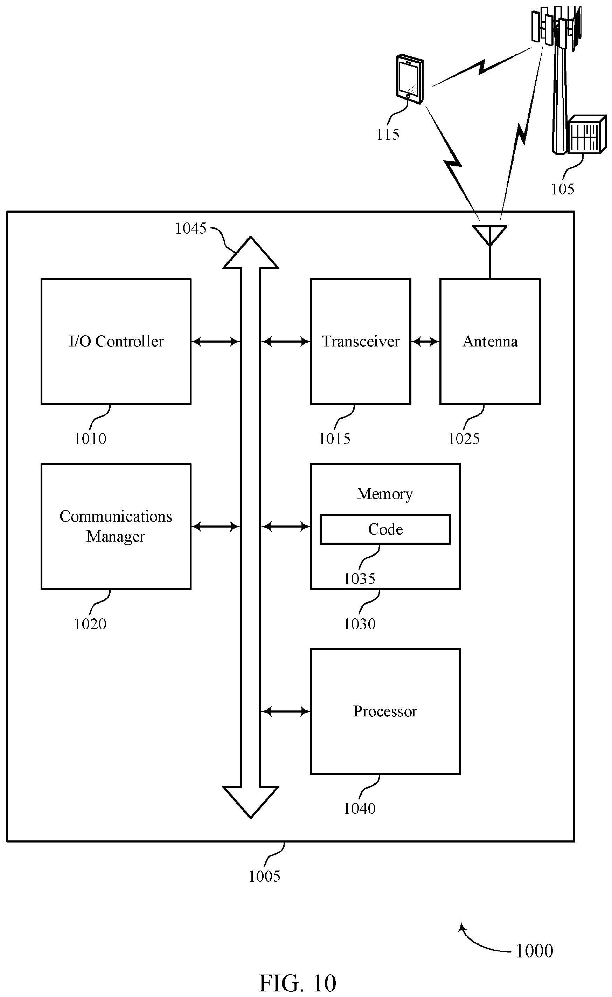

**FIG. 10** shows a diagram of a system 1000 including a device 1005 that supports techniques for remote UE handover due to relay UE mobility in accordance with aspects of the present disclosure. The device 1005 may be an example of or include the components of a device 705, a device 805, or a UE 115 as described herein. The device 1005 may communicate wirelessly with one or more base stations 105, UEs 115, or any combination thereof. The device 1005 may include components for bi-directional voice and data communications including components for transmitting and receiving communications, such as a communications manager 1020, an input/output (I/O) controller 1010, a transceiver 1015, an antenna 1025, a memory 1030, code 1035, and a processor 1040. These components may be in electronic communication or otherwise coupled (e.g., operatively, communicatively, functionally, electronically, electrically) via one or more buses (e.g., a bus 1045).

The I/O controller 1010 may manage input and output signals for the device 1005. The I/O controller 1010 may also manage peripherals not integrated into the device 1005. In some cases, the I/O controller 1010 may represent a physical connection or port to an external peripheral. In some cases, the I/O controller 1010 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally, or alternatively, the I/O controller 1010 may represent or interact with a modem, a keyboard, a mouse, a touchscreen, or a similar device. In some cases, the I/O controller 1010 may be implemented as part of a processor, such as the processor 1040. In some cases, a user may interact with the device 1005 via the I/O controller 1010 or via hardware components controlled by the I/O controller 1010.

In some cases, the device 1005 may include a single antenna 1025. However, in some other cases, the device 1005 may have more than one antenna 1025, which may be capable of concurrently transmitting or receiving multiple wireless transmissions. The transceiver 1015 may communicate bi-directionally, via the one or more antennas 1025, wired, or wireless links as described herein. For example, the transceiver 1015 may represent a wireless transceiver and may communicate bi-directionally with another wireless transceiver. The transceiver 1015 may also include a modem to modulate the packets, to provide the modulated packets to one or more antennas 1025 for transmission, and to demodulate packets received from the one or more antennas 1025. The transceiver 1015, or the transceiver 1015 and one or more antennas 1025, may be an example of a transmitter 715, a transmitter 815, a receiver 710, a receiver 810, or any combination thereof or component thereof, as described herein.

The memory 1030 may include random access memory (RAM) and read-only memory (ROM). The memory 1030 may store computer-readable, computer-executable code 1035 including instructions that, when executed by the processor 1040, cause the device 1005 to perform various functions described herein. The code 1035 may be stored in a non-transitory computer-readable medium such as system memory or another type of memory. In some cases, the code 1035 may not be directly executable by the processor 1040 but may cause a computer (e.g., when compiled and executed) to perform functions described herein. In some cases, the memory 1030 may contain, among other things, a basic I/O system (BIOS) which may control basic hardware or software operation such as the interaction with peripheral components or devices.

The processor 1040 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1040 may be configured to operate a memory array using a memory controller. In some other cases, a memory controller may be integrated into the processor 1040. The processor 1040 may be configured to execute computer-readable instructions stored in a memory (e.g., the memory 1030) to cause the device 1005 to perform various functions (e.g., functions or tasks supporting techniques for remote UE handover due to relay UE mobility). For example, the device 1005 or a component of the device 1005 may include a processor 1040 and memory 1030 coupled to the processor 1040, the processor 1040 and memory 1030 configured to perform various functions described herein.

The communications manager 1020 may support wireless communication at a first UE in accordance with examples as disclosed herein. For example, the communications manager 1020 may be configured as or otherwise support a means for communicating with a first base station, where the first UE is configured to relay wireless communications between a second UE and the first base station via at least a sidelink communication link between the first UE and the second UE. The communications manager 1020 may be configured as or otherwise support a means for receiving, from the first base station, an indication for the first UE to perform a first handover procedure from the first base station to a second base station. The communications manager 1020 may be configured as or otherwise support a means for transmitting, to the second UE via the sidelink communication link and based on receiving the indication to perform the first handover procedure, a sidelink transmission including a trigger for the second UE to perform a second handover procedure or a reselection procedure. The communications manager 1020 may be configured as or otherwise support a means for communicating with the second base station based on performing the first handover procedure from the first base station to the second base station.

Additionally, or alternatively, the communications manager 1020 may support wireless communication at a second UE in accordance with examples as disclosed herein. For example, the communications manager 1020 may be configured as or otherwise support a means for communicating with a first base station via a first UE, where the first UE is configured to relay wireless communications between the second UE and the first base station via at least a sidelink communication link between the first UE and the second UE. The communications manager 1020 may be configured as or otherwise support a means for identifying a trigger for the second UE to perform a second handover procedure or a reselection procedure, where the trigger is based on a first handover procedure of the first UE from the first base station to a second base station. The communications manager 1020 may be configured as or otherwise support a means for performing at least one of the second handover procedure or the reselection procedure based on identifying the trigger.

Additionally, or alternatively, the communications manager 1020 may support wireless communication at a second UE in accordance with examples as disclosed herein. For example, the communications manager 1020 may be configured as or otherwise support a means for communicating with a first base station via a first UE, where the first UE is configured to relay wireless communications between the second UE and the first base station via at least a sidelink communication link between the first UE and the second UE. The communications manager 1020 may be configured as or otherwise support a means for receiving, from the first UE, a radio resource control message including an indication for the second UE to perform a handover procedure from the first UE to an additional wireless device. The communications manager 1020 may be configured as or otherwise support a means for performing the handover procedure from the first UE to the additional wireless device based on receiving the radio resource control message.

By including or configuring the communications manager 1020 in accordance with examples as described herein, the device 1005 may support techniques for improved handover procedures for both remote UEs 115 and relay UEs 115 in the context of wireless communications systems which do not support group mobility. In particular, techniques described herein may support improved handover procedures which may reduce, or eliminate, interruptions of data transfer at a remote UE 115 which are attributable to handover procedures of a relay UE 115 or the remote UE 115. By reducing interruptions of data transfer at the remote UE 115 which are attributable to handover procedures, techniques described herein may enable improved service continuity, decrease power consumption attributable to handover procedures, and improve user experience.

In some examples, the communications manager 1020 may be configured to perform various operations (e.g., receiving, monitoring, transmitting) using or otherwise in cooperation with the transceiver 1015, the one or more antennas 1025, or any combination thereof. Although the communications manager 1020 is illustrated as a separate component, in some examples, one or more functions described with reference to the communications manager 1020 may be supported by or performed by the processor 1040, the memory 1030, the code 1035, or any combination thereof. For example, the code 1035 may include instructions executable by the processor 1040 to cause the device 1005 to perform various aspects of techniques for remote UE handover due to relay UE mobility as described herein, or the processor 1040 and the memory 1030 may be otherwise configured to perform or support such operations.

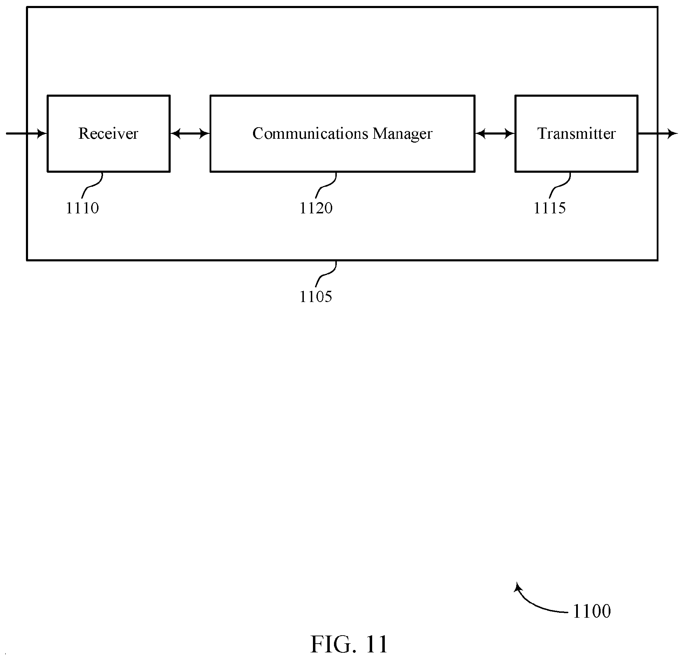

**FIG. 11** shows a block diagram 1100 of a device 1105 that supports techniques for remote UE handover due to relay UE mobility in accordance with aspects of the present disclosure. The device 1105 may be an example of aspects of a base station 105 as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for receiving information such as packets, user data, control information, or any combination thereof associated with various information channels (e.g., control channels, data channels, information channels related to techniques for remote UE handover due to relay UE mobility). Information may be passed on to other components of the device 1105. The receiver 1110 may utilize a single antenna or a set of multiple antennas.

The transmitter 1115 may provide a means for transmitting signals generated by other components of the device 1105. For example, the transmitter 1115 may transmit information such as packets, user data, control information, or any combination thereof associated with various information channels (e.g., control channels, data channels, information channels related to techniques for remote UE handover due to relay UE mobility). In some examples, the transmitter 1115 may be co-located with a receiver 1110 in a transceiver module. The transmitter 1115 may utilize a single antenna or a set of multiple antennas.

The communications manager 1120, the receiver 1110, the transmitter 1115, or various combinations thereof or various components thereof may be examples of means for performing various aspects of techniques for remote UE handover due to relay UE mobility as described herein. For example, the communications manager 1120, the receiver 1110, the transmitter 1115, or various combinations or components thereof may support a method for performing one or more of the functions described herein.

In some examples, the communications manager 1120, the receiver 1110, the transmitter 1115, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 1120, the receiver 1110, the transmitter 1115, or various combinations or components thereof may be implemented in code (e.g., as communications management software or firmware) executed by a processor. If implemented in code executed by a processor, the functions of the communications manager 1120, the receiver 1110, the transmitter 1115, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 1120 may be configured to perform various operations (e.g., receiving, monitoring, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to receive information, transmit information, or perform various other operations as described herein.

The communications manager 1120 may support wireless communication at a second base station in accordance with examples as disclosed herein. For example, the communications manager 1120 may be configured as or otherwise support a means for generating a radio resource control message including an indication for a second UE to perform a handover procedure, where the second UE is in wireless communication with a first base station via at least a sidelink communication link between the second UE and a first UE, where the handover procedure is associated with a handover of the second UE from the first UE to a third UE. The communications manager 1120 may be configured as or otherwise support a means for transmitting the radio resource control message to the third UE based on generating the radio resource control message. The communications manager 1120 may be configured as or otherwise support a means for receiving, from the third UE, an uplink transmission indicating a completion of the handover procedure. The communications manager 1120 may be configured as or otherwise support a means for communicating with the second UE, the third UE, or both, based on receiving the uplink transmission.

By including or configuring the communications manager 1120 in accordance with examples as described herein, the device 1105 (e.g., a processor controlling or otherwise coupled to the receiver 1110, the transmitter 1115, the communications manager 1120, or a combination thereof) may support techniques for improved handover procedures for both remote UEs 115 and relay UEs 115 in the context of wireless communications systems which do not support group mobility. In particular, techniques described herein may support improved handover procedures which may reduce, or eliminate, interruptions of data transfer at a remote UE 115 which are attributable to handover procedures of a relay UE 115 or the remote UE 115. By reducing interruptions of data transfer at the remote UE 115 which are attributable to handover procedures, techniques described herein may enable improved service continuity, decrease power consumption attributable to handover procedures, and improve user experience.

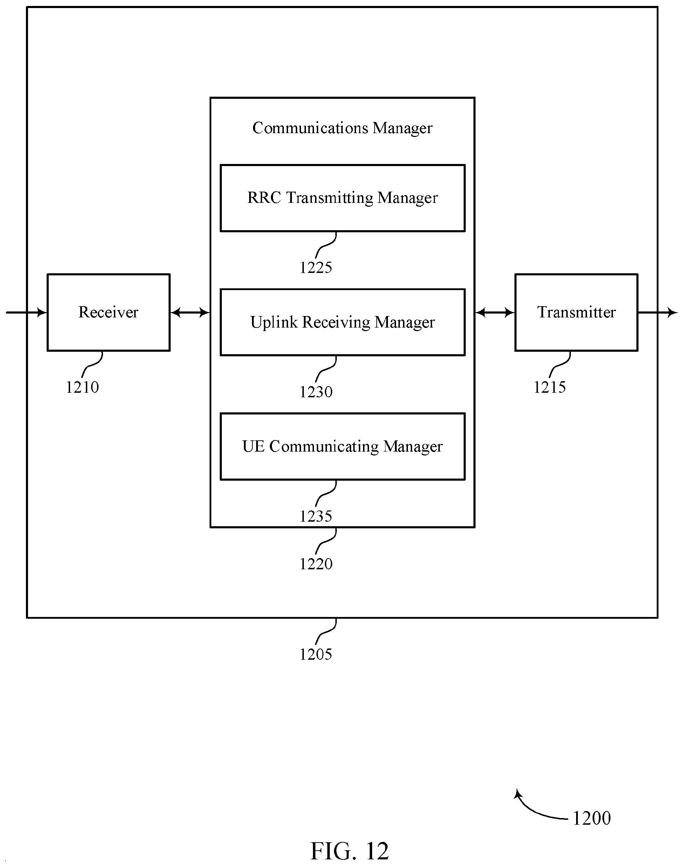

**FIG. 12** shows a block diagram 1200 of a device 1205 that supports techniques for remote UE handover due to relay UE mobility in accordance with aspects of the present disclosure. The device 1205 may be an example of aspects of a device 1105 or a base station 105 as described herein. The device 1205 may include a receiver 1210, a transmitter 1215, and a communications manager 1220. The device 1205 may also include a processor. Each of these components may be in communication with one another (e.g., via one or more buses).

The receiver 1210 may provide a means for receiving information such as packets, user data, control information, or any combination thereof associated with various information channels (e.g., control channels, data channels, information channels related to techniques for remote UE handover due to relay UE mobility). Information may be passed on to other components of the device 1205. The receiver 1210 may utilize a single antenna or a set of multiple antennas.

The transmitter 1215 may provide a means for transmitting signals generated by other components of the device 1205. For example, the transmitter 1215 may transmit information such as packets, user data, control information, or any combination thereof associated with various information channels (e.g., control channels, data channels, information channels related to techniques for remote UE handover due to relay UE mobility). In some examples, the transmitter 1215 may be co-located with a receiver 1210 in a transceiver module. The transmitter 1215 may utilize a single antenna or a set of multiple antennas.

The device 1205, or various components thereof, may be an example of means for performing various aspects of techniques for remote UE handover due to relay UE mobility as described herein. For example, the communications manager 1220 may include an RRC transmitting manager 1225, an uplink receiving manager 1230, a UE communicating manager 1235, or any combination thereof. The communications manager 1220 may be an example of aspects of a communications manager 1120 as described herein. In some examples, the communications manager 1220, or various components thereof, may be configured to perform various operations (e.g., receiving, monitoring, transmitting) using or otherwise in cooperation with the receiver 1210, the transmitter 1215, or both. For example, the communications manager 1220 may receive information from the receiver 1210, send information to the transmitter 1215, or be integrated in combination with the receiver 1210, the transmitter 1215, or both to receive information, transmit information, or perform various other operations as described herein.

The communications manager 1220 may support wireless communication at a second base station in accordance with examples as disclosed herein. The RRC transmitting manager 1225 may be configured as or otherwise support a means for generating a radio resource control message including an indication for a second UE to perform a handover procedure, where the second UE is in wireless communication with a first base station via at least a sidelink communication link between the second UE and a first UE, where the handover procedure is associated with a handover of the second UE from the first UE to a third UE. The RRC transmitting manager 1225 may be configured as or otherwise support a means for transmitting the radio resource control message to the third UE based on generating the radio resource control message. The uplink receiving manager 1230 may be configured as or otherwise support a means for receiving, from the third UE, an uplink transmission indicating a completion of the handover procedure. The UE communicating manager 1235 may be configured as or otherwise support a means for communicating with the second UE, the third UE, or both, based on receiving the uplink transmission.

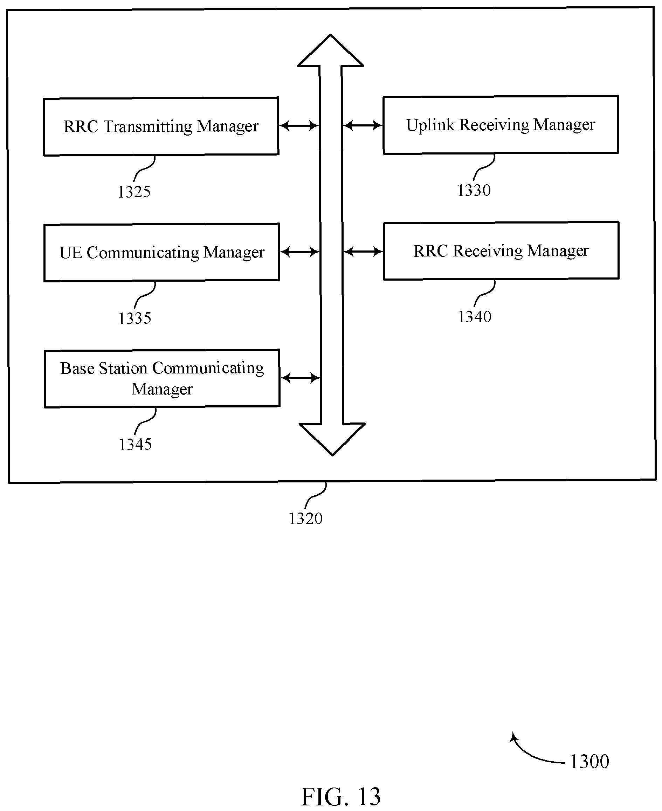

**FIG. 13** shows a block diagram 1300 of a communications manager 1320 that supports techniques for remote UE handover due to relay UE mobility in accordance with aspects of the present disclosure. The communications manager 1320 may be an example of aspects of a communications manager 1120, a communications manager 1220, or both, as described herein. The communications manager 1320, or various components thereof, may be an example of means for performing various aspects of techniques for remote UE handover due to relay UE mobility as described herein. For example, the communications manager 1320 may include an RRC transmitting manager 1325, an uplink receiving manager 1330, a UE communicating manager 1335, an RRC receiving manager 1340, a base station communicating manager 1345, or any combination thereof. Each of these components may communicate, directly or indirectly, with one another (e.g., via one or more buses).

The communications manager 1320 may support wireless communication at a second base station in accordance with examples as disclosed herein. The RRC transmitting manager 1325 may be configured as or otherwise support a means for generating a radio resource control message including an indication for a second UE to perform a handover procedure, where the second UE is in wireless communication with a first base station via at least a sidelink communication link between the second UE and a first UE, where the handover procedure is associated with a handover of the second UE from the first UE to a third UE. In some examples, the RRC transmitting manager 1325 may be configured as or otherwise support a means for transmitting the radio resource control message to the third UE based on generating the radio resource control message. The uplink receiving manager 1330 may be configured as or otherwise support a means for receiving, from the third UE, an uplink transmission indicating a completion of the handover procedure. The UE communicating manager 1335 may be configured as or otherwise support a means for communicating with the second UE, the third UE, or both, based on receiving the uplink transmission.

In some examples, to support communicating with the second UE, the third UE, or both, the UE communicating manager 1335 may be configured as or otherwise support a means for communicating with the third UE via a Uu communication link between the third UE and the second base station. In some examples, to support communicating with the second UE, the third UE, or both, the UE communicating manager 1335 may be configured as or otherwise support a means for communicating with the second UE via the third UE, where the third UE is configured to relay wireless communications between the second UE and the second base station via at least an additional sidelink communication link between the second UE and the third UE.

In some examples, the RRC receiving manager 1340 may be configured as or otherwise support a means for receiving, from the second UE via the third UE, a second radio resource control message including an indication of the completion of the handover procedure from the first UE to the third UE, where communicating with the second UE is based on receiving the second radio resource control message.

In some examples, the RRC receiving manager 1340 may be configured as or otherwise support a means for receiving, from the first UE, a second radio resource control message including an indication of the completion of the handover procedure of the second UE from the first UE to the third UE, where communicating with the second UE is based on receiving the second radio resource control message.

In some examples, the radio resource control message includes a first identifier associated with the second UE, a second identifier associated with the third UE, or both. In some examples, communicating with the second UE, the third UE, or both, is based on the first identifier, the second identifier, or both.

In some examples, the base station communicating manager 1345 may be configured as or otherwise support a means for communicating with the first base station, where generating the radio resource control message is based on communicating with the first base station.

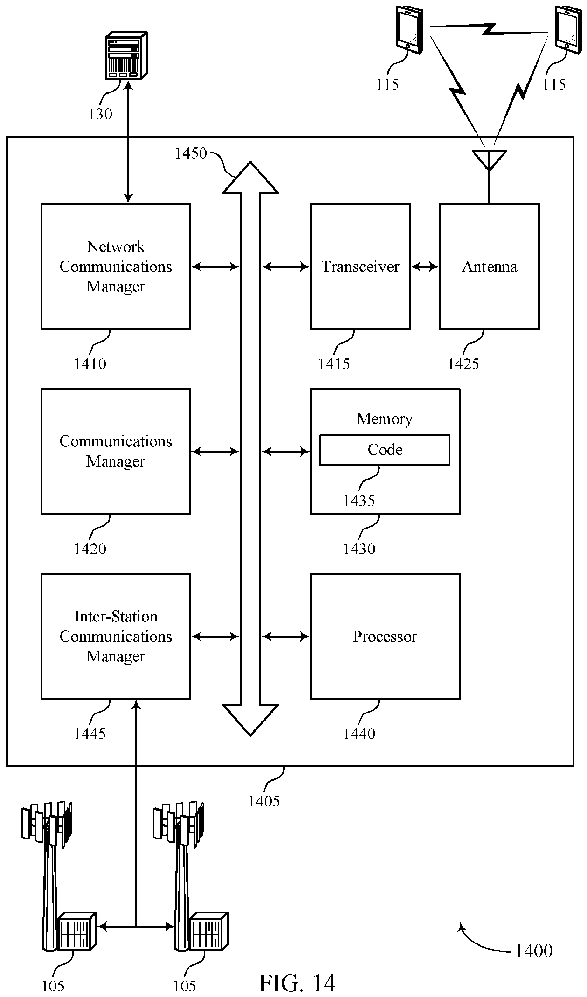

**FIG. 14** shows a diagram of a system 1400 including a device 1405 that supports techniques for remote UE handover due to relay UE mobility in accordance with aspects of the present disclosure. The device 1405 may be an example of or include the components of a device 1105, a device 1205, or a base station 105 as described herein. The device 1405 may communicate wirelessly with one or more base stations 105, UEs 115, or any combination thereof. The device 1405 may include components for bi-directional voice and data communications including components for transmitting and receiving communications, such as a communications manager 1420, a network communications manager 1410, a transceiver 1415, an antenna 1425, a memory 1430, code 1435, a processor 1440, and an inter-station communications manager 1445. These components may be in electronic communication or otherwise coupled (e.g., operatively, communicatively, functionally, electronically, electrically) via one or more buses (e.g., a bus 1450).

The network communications manager 1410 may manage communications with a core network 130 (e.g., via one or more wired backhaul links). For example, the network communications manager 1410 may manage the transfer of data communications for client devices, such as one or more UEs 115.

In some cases, the device 1405 may include a single antenna 1425. However, in some other cases the device 1405 may have more than one antenna 1425, which may be capable of concurrently transmitting or receiving multiple wireless transmissions. The transceiver 1415 may communicate bi-directionally, via the one or more antennas 1425, wired, or wireless links as described herein. For example, the transceiver 1415 may represent a wireless transceiver and may communicate bi-directionally with another wireless transceiver. The transceiver 1415 may also include a modem to modulate the packets, to provide the modulated packets to one or more antennas 1425 for transmission, and to demodulate packets received from the one or more antennas 1425. The transceiver 1415, or the transceiver 1415 and one or more antennas 1425, may be an example of a transmitter 1115, a transmitter 1215, a receiver 1110, a receiver 1210, or any combination thereof or component thereof, as described herein.

The memory 1430 may include RAM and ROM. The memory 1430 may store computer-readable, computer-executable code 1435 including instructions that, when executed by the processor 1440, cause the device 1405 to perform various functions described herein. The code 1435 may be stored in a non-transitory computer-readable medium such as system memory or another type of memory. In some cases, the code 1435 may not be directly executable by the processor 1440 but may cause a computer (e.g., when compiled and executed) to perform functions described herein. In some cases, the memory 1430 may contain, among other things, a BIOS which may control basic hardware or software operation such as the interaction with peripheral components or devices.

The processor 1440 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1440 may be configured to operate a memory array using a memory controller. In some other cases, a memory controller may be integrated into the processor 1440. The processor 1440 may be configured to execute computer-readable instructions stored in a memory (e.g., the memory 1430) to cause the device 1405 to perform various functions (e.g., functions or tasks supporting techniques for remote UE handover due to relay UE mobility). For example, the device 1405 or a component of the device 1405 may include a processor 1440 and memory 1430 coupled to the processor 1440, the processor 1440 and memory 1430 configured to perform various functions described herein.

The inter-station communications manager 1445 may manage communications with other base stations 105, and may include a controller or scheduler for controlling communications with UEs 115 in cooperation with other base stations 105. For example, the inter-station communications manager 1445 may coordinate scheduling for transmissions to UEs 115 for various interference mitigation techniques such as beamforming or joint transmission. In some examples, the inter-station communications manager 1445 may provide an X2 interface within an LTE/LTE-A wireless communications network technology to provide communication between base stations 105.

The communications manager 1420 may support wireless communication at a second base station in accordance with examples as disclosed herein. For example, the communications manager 1420 may be configured as or otherwise support a means for generating a radio resource control message including an indication for a second UE to perform a handover procedure, where the second UE is in wireless communication with a first base station via at least a sidelink communication link between the second UE and a first UE, where the handover procedure is associated with a handover of the second UE from the first UE to a third UE. The communications manager 1420 may be configured as or otherwise support a means for transmitting the radio resource control message to the third UE based on generating the radio resource control message. The communications manager 1420 may be configured as or otherwise support a means for receiving, from the third UE, an uplink transmission indicating a completion of the handover procedure. The communications manager 1420 may be configured as or otherwise support a means for communicating with the second UE, the third UE, or both, based on receiving the uplink transmission.

By including or configuring the communications manager 1420 in accordance with examples as described herein, the device 1405 may support techniques for improved handover procedures for both remote UEs 115 and relay UEs 115 in the context of wireless communications systems which do not support group mobility. In particular, techniques described herein may support improved handover procedures which may reduce, or eliminate, interruptions of data transfer at a remote UE 115 which are attributable to handover procedures of a relay UE 115 or the remote UE 115. By reducing interruptions of data transfer at the remote UE 115 which are attributable to handover procedures, techniques described herein may enable improved service continuity, decrease power consumption attributable to handover procedures, and improve user experience.

In some examples, the communications manager 1420 may be configured to perform various operations (e.g., receiving, monitoring, transmitting) using or otherwise in cooperation with the transceiver 1415, the one or more antennas 1425, or any combination thereof. Although the communications manager 1420 is illustrated as a separate component, in some examples, one or more functions described with reference to the communications manager 1420 may be supported by or performed by the processor 1440, the memory 1430, the code 1435, or any combination thereof. For example, the code 1435 may include instructions executable by the processor 1440 to cause the device 1405 to perform various aspects of techniques for remote UE handover due to relay UE mobility as described herein, or the processor 1440 and the memory 1430 may be otherwise configured to perform or support such operations.

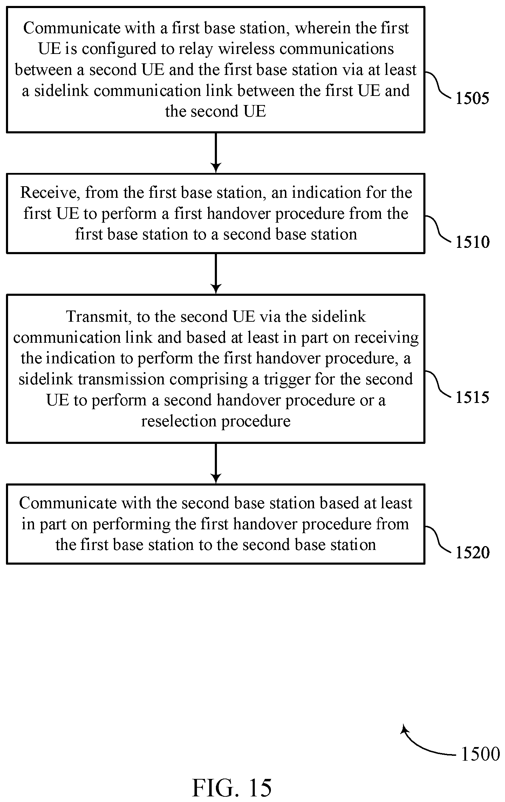

**FIG. 15** shows a flowchart illustrating a method 1500 that supports techniques for remote UE handover due to relay UE mobility in accordance with aspects of the present disclosure. The operations of the method 1500 may be implemented by a UE or its components as described herein. For example, the operations of the method 1500 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1505, the method may include communicating with a first base station, where the first UE is configured to relay wireless communications between a second UE and the first base station via at least a sidelink communication link between the first UE and the second UE. The operations of 1505 may be performed in accordance with examples as disclosed herein. In some examples, aspects of the operations of 1505 may be performed by a base station communicating manager 925 as described with reference to FIG. 9.

At 1510, the method may include receiving, from the first base station, an indication for the first UE to perform a first handover procedure from the first base station to a second base station. The operations of 1510 may be performed in accordance with examples as disclosed herein. In some examples, aspects of the operations of 1510 may be performed by a handover command receiving manager 930 as described with reference to FIG. 9.

At 1515, the method may include transmitting, to the second UE via the sidelink communication link and based on receiving the indication to perform the first handover procedure, a sidelink transmission including a trigger for the second UE to perform a second handover procedure or a reselection procedure. The operations of 1515 may be performed in accordance with examples as disclosed herein. In some examples, aspects of the operations of 1515 may be performed by a sidelink communicating manager 935 as described with reference to FIG. 9.

At 1520, the method may include communicating with the second base station based on performing the first handover procedure from the first base station to the second base station. The operations of 1520 may be performed in accordance with examples as disclosed herein. In some examples, aspects of the operations of 1520 may be performed by a base station communicating manager 925 as described with reference to FIG. 9.

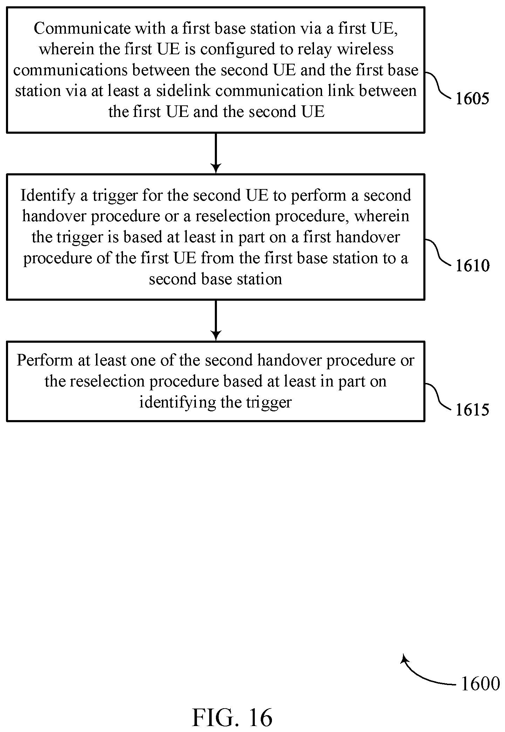

**FIG. 16** shows a flowchart illustrating a method 1600 that supports techniques for remote UE handover due to relay UE mobility in accordance with aspects of the present disclosure. The operations of the method 1600 may be implemented by a UE or its components as described herein. For example, the operations of the method 1600 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1605, the method may include communicating with a first base station via a first UE, where the first UE is configured to relay wireless communications between the second UE and the first base station via at least a sidelink communication link between the first UE and the second UE. The operations of 1605 may be performed in accordance with examples as disclosed herein. In some examples, aspects of the operations of 1605 may be performed by a base station communicating manager 925 as described with reference to FIG. 9.

At 1610, the method may include identifying a trigger for the second UE to perform a second handover procedure or a reselection procedure, where the trigger is based on a first handover procedure of the first UE from the first base station to a second base station. The operations of 1610 may be performed in accordance with examples as disclosed herein. In some examples, aspects of the operations of 1610 may be performed by a handover/reselection procedure manager 940 as described with reference to FIG. 9.

At 1615, the method may include performing at least one of the second handover procedure or the reselection procedure based on identifying the trigger. The operations of 1615 may be performed in accordance with examples as disclosed herein. In some examples, aspects of the operations of 1615 may be performed by a handover/reselection procedure manager 940 as described with reference to FIG. 9.

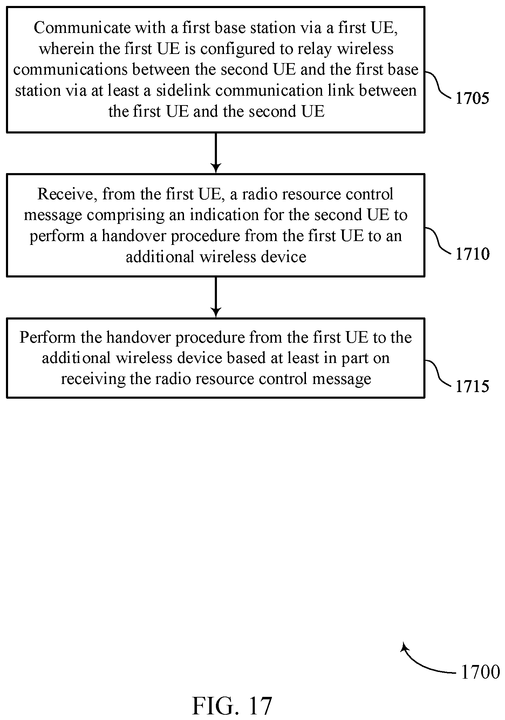

**FIG. 17** shows a flowchart illustrating a method 1700 that supports techniques for remote UE handover due to relay UE mobility in accordance with aspects of the present disclosure. The operations of the method 1700 may be implemented by a UE or its components as described herein. For example, the operations of the method 1700 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1705, the method may include communicating with a first base station via a first UE, where the first UE is configured to relay wireless communications between the second UE and the first base station via at least a sidelink communication link between the first UE and the second UE. The operations of 1705 may be performed in accordance with examples as disclosed herein. In some examples, aspects of the operations of 1705 may be performed by a sidelink communicating manager 935 as described with reference to FIG. 9.

At 1710, the method may include receiving, from the first UE, a radio resource control message including an indication for the second UE to perform a handover procedure from the first UE to an additional wireless device. The operations of 1710 may be performed in accordance with examples as disclosed herein. In some examples, aspects of the operations of 1710 may be performed by an RRC receiving manager 945 as described with reference to FIG. 9.

At 1715, the method may include performing the handover procedure from the first UE to the additional wireless device based on receiving the radio resource control message. The operations of 1715 may be performed in accordance with examples as disclosed herein. In some examples, aspects of the operations of 1715 may be performed by a handover/reselection procedure manager 940 as described with reference to FIG. 9.

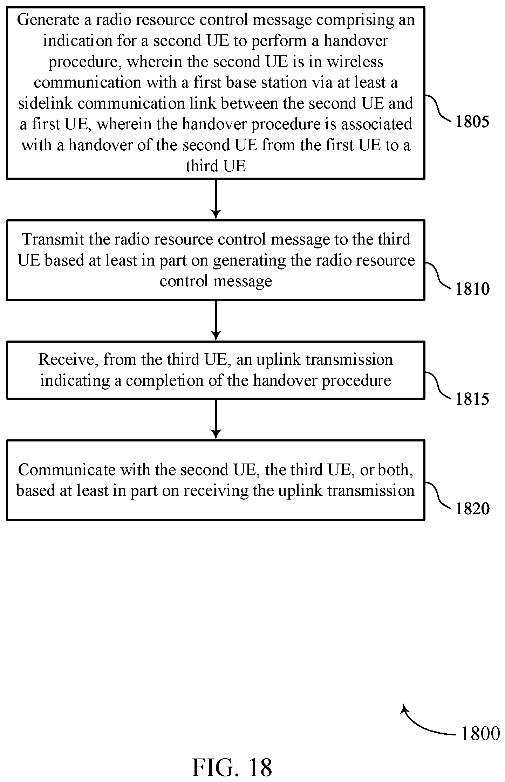

**FIG. 18** shows a flowchart illustrating a method 1800 that supports techniques for remote UE handover due to relay UE mobility in accordance with aspects of the present disclosure. The operations of the method 1800 may be implemented by a base station or its components as described herein. For example, the operations of the method 1800 may be performed by a base station 105 as described with reference to FIGs. 1 through 6 and 11 through 14. In some examples, a base station may execute a set of instructions to control the functional elements of the base station to perform the described functions. Additionally or alternatively, the base station may perform aspects of the described functions using special-purpose hardware.

At 1805, the method may include generating a radio resource control message including an indication for a second UE to perform a handover procedure, where the second UE is in wireless communication with a first base station via at least a sidelink communication link between the second UE and a first UE, where the handover procedure is associated with a handover of the second UE from the first UE to a third UE. The operations of 1805 may be performed in accordance with examples as disclosed herein. In some examples, aspects of the operations of 1805 may be performed by an RRC transmitting manager 1325 as described with reference to FIG. 13.

At 1810, the method may include transmitting the radio resource control message to the third UE based on generating the radio resource control message. The operations of 1810 may be performed in accordance with examples as disclosed herein. In some examples, aspects of the operations of 1810 may be performed by an RRC transmitting manager 1325 as described with reference to FIG. 13.

At 1815, the method may include receiving, from the third UE, an uplink transmission indicating a completion of the handover procedure. The operations of 1815 may be performed in accordance with examples as disclosed herein. In some examples, aspects of the operations of 1815 may be performed by an uplink receiving manager 1330 as described with reference to FIG. 13.

At 1820, the method may include communicating with the second UE, the third UE, or both, based on receiving the uplink transmission. The operations of 1820 may be performed in accordance with examples as disclosed herein. In some examples, aspects of the operations of 1820 may be performed by a UE communicating manager 1335 as described with reference to FIG. 13.

The following provides an overview of aspects of the present disclosure:
Aspect 1: A method for wireless communication at a first UE, comprising: communicating with a first base station, wherein the first UE is configured to relay wireless communications between a second UE and the first base station via at least a sidelink communication link between the first UE and the second UE; receiving, from the first base station, an indication for the first UE to perform a first handover procedure from the first base station to a second base station; transmitting, to the second UE via the sidelink communication link and based at least in part on receiving the indication to perform the first handover procedure, a sidelink transmission comprising a trigger for the second UE to perform a second handover procedure or a reselection procedure; and communicating with the second base station based at least in part on performing the first handover procedure from the first base station to the second base station.
Aspect 2: The method of aspect 1, further comprising: performing the second handover procedure or the reselection procedure with the second UE based at least in part on the first handover procedure and identifying an interruption in data transfer between the first UE and the second UE; and communicating with the second UE via the sidelink communication link based at least in part on performing the second handover procedure or the reselection procedure.
Aspect 3: The method of any of aspects 1 through 2, further comprising: transmitting, to the second base station, an RRC message indicating a completion of the first handover procedure, wherein communicating with the second base station is based at least in part on transmitting the RRC message.
Aspect 4: The method of any of aspects 1 through 3, further comprising: transmitting, to the second UE via the sidelink transmission, a sidelink release message indicating for the second UE to release a wireless connection between the first UE and the second UE.
Aspect 5: The method of aspect 4, wherein the sidelink release message comprises a Layer 2 (L2) release message.
Aspect 6: The method of any of aspects 4 through 5, further comprising: transmitting, to the second UE via the sidelink transmission, a sidelink modification message indicating for the second UE to reconfigure a wireless connection between the first UE and the second UE.
Aspect 7: The method of any of aspects 1 through 6, wherein the sidelink transmission comprises an RRC message, the method further comprising: transmitting, to the second UE via the RRC message, an indication of the first handover procedure, an identifier associated with the second base station, or both, wherein the indication to perform the second handover procedure, the reselection procedure, or both, is based at least in part on the indication of the first handover procedure, the identifier associated with the second base station, or both.
Aspect 8: The method of any of aspects 1 through 7, further comprising: transmitting, to the second UE based at least in part on identifying an interruption of data transfer between the first UE and the second UE, an RRC message comprising an indication of a completion of the first handover procedure, an indication of an identifier associated with the second base station, or both; receiving, from the second UE, a request to reestablish wireless communications between the first UE and the second UE based at least in part on the RRC message; and communicating with the second UE via the sidelink communication link based at least in part on receiving the request.
Aspect 9: The method of aspect 8, further comprising: relaying the request from the second UE to the second base station based at least in part on receiving the request; and relaying wireless communications between the second UE and the second base station via at least the sidelink communication link between the first UE and the second base station based at least in part on relaying the request.
Aspect 10: A method for wireless communication at a second UE, comprising: communicating with a first base station via a first UE, wherein the first UE is configured to relay wireless communications between the second UE and the first base station via at least a sidelink communication link between the first UE and the second UE; identifying a trigger for the second UE to perform a second handover procedure or a reselection procedure, wherein the trigger is based at least in part on a first handover procedure of the first UE from the first base station to a second base station; and performing at least one of the second handover procedure or the reselection procedure based at least in part on identifying the trigger.
Aspect 11: The method of aspect 10, further comprising: performing the second handover procedure or the reselection procedure with the second UE based at least in part on the first handover procedure and identifying an interruption in data transfer between the first UE and the second UE; and communicating with the first UE via the sidelink communication link based at least in part on performing the second handover procedure or the reselection procedure.
Aspect 12: The method of any of aspects 10 through 11, further comprising: receiving, from the first UE, a sidelink release message indicating for the second UE to release a wireless connection between the first UE and the second UE; and releasing the wireless connection between the first UE and the second UE based at least in part on receiving the release message, wherein performing the second handover procedure or the reselection procedure is based at least in part on releasing the wireless connection.
Aspect 13: The method of aspect 12, wherein the sidelink release message comprises an L2 release message.
Aspect 14: The method of any of aspects 12 through 13, further comprising: receiving, from the first UE via the sidelink transmission, a sidelink modification message indicating for the second UE to reconfigure a wireless connection between the first UE and the second UE.
Aspect 15: The method of any of aspects 10 through 14, further comprising: initiating a timer based at least in part on the first handover procedure and identifying an interruption of data transfer between the first UE and the second UE; identifying an expiration of the timer based at least in part on initiating the timer; and releasing a wireless connection between the first UE and the second UE based at least in part on identifying the expiration of the timer, wherein performing the second handover procedure or the reselection procedure is based at least in part on releasing the wireless connection.
Aspect 16: The method of any of aspects 10 through 15, further comprising: communicating with the first UE, the first base station, the second base station, an additional UE, an additional base station, or any combination thereof, based at least in part on performing the second handover procedure, the reselection procedure, or both.
Aspect 17: The method of any of aspects 10 through 16, further comprising: receiving, from the first UE, an RRC message comprising an indication of the first handover procedure, an identifier associated with the second base station, or both, wherein the indication to perform the second handover procedure, the reselection procedure, or both, is based at least in part on the indication of the first handover procedure, the identifier associated with the second base station, or both.
Aspect 18: The method of any of aspects 10 through 17, further comprising: receiving, from the second UE based at least in part on identifying an interruption of data transfer between the first UE and the second UE, an RRC message comprising an indication of a completion of the first handover procedure, an indication of an identifier associated with the second base station, or both; transmitting, to the first UE, a request to reestablish wireless communications between the first UE and the second UE based at least in part on the RRC message; and communicating with the first UE via the sidelink communication link based at least in part on receiving the request.
Aspect 19: The method of aspect 18, further comprising: suspending wireless communications between the first UE and the second UE without releasing a wireless connection between the first UE and the second UE based at least in part on receiving the RRC message, wherein receiving the RRC message is based at least in part on suspending the wireless communications.
Aspect 20: The method of any of aspects 18 through 19, further comprising: communicating with the second base station via the first UE based at least in part on communicating with the first UE, wherein the first UE is configured to relay wireless communications between the second UE and the second base station via at least the sidelink communication link between the first UE and the second UE.
Aspect 21: The method of any of aspects 18 through 20, wherein the second UE transmits the request based at least in part on identifying a priority associated with the first UE.
Aspect 22: The method of any of aspects 10 through 21, further comprising: receiving, from the first UE based at least in part on identifying an interruption of data transfer between the first UE and the second UE, an RRC message comprising an indication of a failure of the first handover procedure; and releasing a wireless connection between the first UE and the second UE based at least in part on receiving the indication of the failure of the first handover procedure, wherein performing the second handover procedure or the reselection procedure is based at least in part on releasing the wireless connection.
Aspect 23: A method for wireless communication at a second UE, comprising: communicating with a first base station via a first UE, wherein the first UE is configured to relay wireless communications between the second UE and the first base station via at least a sidelink communication link between the first UE and the second UE; receiving, from the first UE, an RRC message comprising an indication for the second UE to perform a handover procedure from the first UE to an additional wireless device; and performing the handover procedure from the first UE to the additional wireless device based at least in part on receiving the RRC message.
Aspect 24: The method of aspect 23, wherein the additional wireless device comprises a third UE, the method further comprising: transmitting, to the third UE based at least in part on receiving the RRC message, a request to establish wireless communications with the third UE; and communicating with the third UE via an additional sidelink communication link between the second UE and the third UE based at least in part on transmitting the request.
Aspect 25: The method of aspect 24, further comprising: communicating with the first base station, a second base station, or both, via the third UE based at least in part on communicating with the third UE, wherein the third UE is configured to relay wireless communications between the second UE and the first base station, the second base station, or both, via at least the additional sidelink communication link between the second UE and the third UE.
Aspect 26: The method of any of aspects 23 through 25, wherein the additional wireless device comprises the first base station, a second base station, or both, the method further comprising: transmitting, based at least in part on receiving the RRC message, a request to establish wireless communications with the first base station, the second base station, or both; and communicating with the first base station, the second base station, or both, via one or more Uu communication links based at least in part on transmitting the request.
Aspect 27: The method of any of aspects 23 through 26, further comprising: releasing a wireless connection between the second UE and the first UE based at least in part on receiving the RRC message, wherein performing the handover procedure is based at least in part on releasing the wireless connection.
Aspect 28: The method of any of aspects 23 through 27, wherein the RRC message comprises a first identifier associated with the second UE, a second identifier associated with the additional wireless device, or both, performing the handover procedure from the first UE to the additional wireless device is based at least in part on the first identifier, the second identifier, or both.
Aspect 29: A method for wireless communication at a second base station, comprising: generating an RRC message comprising an indication for a second UE to perform a handover procedure, wherein the second UE is in wireless communication with a first base station via at least a sidelink communication link between the second UE and a first UE, wherein the handover procedure is associated with a handover of the second UE from the first UE to a third UE; transmitting the RRC message to the third UE based at least in part on generating the RRC message; receiving, from the third UE, an uplink transmission indicating a completion of the handover procedure; and communicating with the second UE, the third UE, or both, based at least in part on receiving the uplink transmission.
Aspect 30: The method of aspect 29, wherein communicating with the second UE, the third UE, or both, comprises: communicating with the third UE via a Uu communication link between the third UE and the second base station; and communicating with the second UE via the third UE, wherein the third UE is configured to relay wireless communications between the second UE and the second base station via at least an additional sidelink communication link between the second UE and the third UE.
Aspect 31: The method of any of aspects 29 through 30, further comprising: receiving, from the second UE via the third UE, a second RRC message comprising an indication of the completion of the handover procedure from the first UE to the third UE, wherein communicating with the second UE is based at least in part on receiving the second RRC message.
Aspect 32: The method of any of aspects 29 through 31, further comprising: receiving, from the first UE, a second RRC message comprising an indication of the completion of the handover procedure of the second UE from the first UE to the third UE, wherein communicating with the second UE is based at least in part on receiving the second RRC message.
Aspect 33: The method of any of aspects 29 through 32, wherein the RRC message comprises a first identifier associated with the second UE, a second identifier associated with the third UE, or both, communicating with the second UE, the third UE, or both, is based at least in part on the first identifier, the second identifier, or both.
Aspect 34: The method of any of aspects 29 through 33, further comprising: communicating with the first base station, wherein generating the RRC message is based at least in part on communicating with the first base station.
Aspect 35: An apparatus for wireless communication at a first UE, comprising a processor; memory coupled with the processor; and instructions stored in the memory and executable by the processor to cause the apparatus to perform a method of any of aspects 1 through 9.
Aspect 36: An apparatus for wireless communication at a first UE, comprising at least one means for performing a method of any of aspects 1 through 9.
Aspect 37: A non-transitory computer-readable medium storing code for wireless communication at a first UE, the code comprising instructions executable by a processor to perform a method of any of aspects 1 through 9.
Aspect 38: An apparatus for wireless communication at a second UE, comprising a processor; memory coupled with the processor; and instructions stored in the memory and executable by the processor to cause the apparatus to perform a method of any of aspects 10 through 22.
Aspect 39: An apparatus for wireless communication at a second UE, comprising at least one means for performing a method of any of aspects 10 through 22.
Aspect 40: A non-transitory computer-readable medium storing code for wireless communication at a second UE, the code comprising instructions executable by a processor to perform a method of any of aspects 10 through 22.
Aspect 41: An apparatus for wireless communication at a second UE, comprising a processor; memory coupled with the processor; and instructions stored in the memory and executable by the processor to cause the apparatus to perform a method of any of aspects 23 through 28.
Aspect 42: An apparatus for wireless communication at a second UE, comprising at least one means for performing a method of any of aspects 23 through 28.
Aspect 43: A non-transitory computer-readable medium storing code for wireless communication at a second UE, the code comprising instructions executable by a processor to perform a method of any of aspects 23 through 28.
Aspect 44: An apparatus for wireless communication at a second base station, comprising a processor; memory coupled with the processor; and instructions stored in the memory and executable by the processor to cause the apparatus to perform a method of any of aspects 29 through 34.
Aspect 45: An apparatus for wireless communication at a second base station, comprising at least one means for performing a method of any of aspects 29 through 34.
Aspect 46: A non-transitory computer-readable medium storing code for wireless communication at a second base station, the code comprising instructions executable by a processor to perform a method of any of aspects 29 through 34.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. A method for wireless communication at a second user equipment, UE, comprising:
communicating (1605) with a first base station via a first UE, wherein the first UE is configured to relay wireless communications between the second UE and the first base station via at least a sidelink communication link between the first UE and the second UE;
identifying (1610) a trigger for the second UE to perform a second handover procedure or a reselection procedure, wherein the trigger is based at least in part on a first handover procedure of the first UE from the first base station to a second base station; and
performing (1615) at least one of the second handover procedure or the reselection procedure based at least in part on identifying the trigger.

2. The method of claim 1, further comprising:
performing the second handover procedure or the reselection procedure with the first UE based at least in part on the first handover procedure and identifying an interruption in data transfer between the first UE and the second UE; and
communicating with the first UE via the sidelink communication link based at least in part on performing the second handover procedure or the reselection procedure.

3. The method of claim 1, further comprising:
receiving, from the first UE, a sidelink release message indicating for the second UE to release a wireless connection between the first UE and the second UE; and
releasing the wireless connection between the first UE and the second UE based at least in part on receiving the release message, wherein performing the second handover procedure or the reselection procedure is based at least in part on releasing the wireless connection.

4. The method of claim 1, further comprising:
initiating a timer based at least in part on the first handover procedure and identifying an interruption of data transfer between the first UE and the second UE;
identifying an expiration of the timer based at least in part on initiating the timer; and
releasing a wireless connection between the first UE and the second UE based at least in part on identifying the expiration of the timer, wherein performing the second handover procedure or the reselection procedure is based at least in part on releasing the wireless connection.

5. The method of claim 1, further comprising:
communicating with the first UE, the first base station, the second base station, an additional UE, an additional base station, or any combination thereof, based at least in part on performing the second handover procedure, the reselection procedure, or both.

6. The method of claim 1, further comprising:
receiving, from the first UE, a radio resource control message comprising an indication of the first handover procedure, an identifier associated with the second base station, or both, wherein the indication to perform the second handover procedure, the reselection procedure, or both, is based at least in part on the indication of the first handover procedure, the identifier associated with the second base station, or both.

7. The method of claim 1, further comprising:
receiving, from the second UE based at least in part on identifying an interruption of data transfer between the first UE and the second UE, a radio resource control message comprising an indication of a completion of the first handover procedure, an indication of an identifier associated with the second base station, or both;
transmitting, to the first UE, a request to reestablish wireless communications between the first UE and the second UE based at least in part on the radio resource control message; and
communicating with the first UE via the sidelink communication link based at least in part on receiving the request.

8. The method of claim 7, further comprising:
suspending wireless communications between the first UE and the second UE without releasing a wireless connection between the first UE and the second UE based at least in part on receiving the radio resource control message, wherein receiving the radio resource control message is based at least in part on suspending the wireless communications.

9. The method of claim 1, further comprising:
receiving, from the first UE based at least in part on identifying an interruption of data transfer between the first UE and the second UE, a radio resource control message comprising an indication of a failure of the first handover procedure; and
releasing a wireless connection between the first UE and the second UE based at least in part on receiving the indication of the failure of the first handover procedure, wherein performing the second handover procedure or the reselection procedure is based at least in part on releasing the wireless connection.

10. A remote user equipment, UE, comprising:
one or more memories storing processor-executable code; and
one or more processors coupled with the one or more memories and individually or collectively operable to execute the code to cause the remote UE to perform any one of the methods of claims 1-9.

11. A non-transitory computer-readable medium storing code for wireless communications, the code comprising instructions executable by one or more processors to perform any one of the methods of claims 1-9.
